(19)

**Europäisches Patentamt**
**European Patent Office**
**Office européen des brevets**

(11)  **EP 4 335 887 B1**

(12)  **EUROPEAN PATENT SPECIFICATION**

(45) Date of publication and mention
of the grant of the patent:
**29.10.2025 Bulletin 2025/44**

(21) Application number: **23195354.8**

(22) Date of filing: **05.09.2023**

(51) International Patent Classification (IPC):
***C08G 63/08*** *(2006.01)* ***C08G 63/82*** *(2006.01)*
***C08G 63/85*** *(2006.01)* ***C08G 63/91*** *(2006.01)*
***C08L 67/04*** *(2006.01)*

(52) Cooperative Patent Classification (CPC):
**C08G 63/08; C08G 63/823; C08G 63/912**

(54) **POLYLACTIC ACID RESIN COMPOSITION, AND MOLDED BODY AND PRODUCTION METHOD THEREOF**

POLYMILCHSÄUREHARZZUSAMMENSETZUNG SOWIE FORMKÖRPER UND HERSTELLUNGSVERFAHREN DAFÜR

COMPOSITION DE RÉSINE D'ACIDE POLYLACTIQUE, ET CORPS MOULÉ ET SON PROCÉDÉ DE PRODUCTION

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **09.09.2022 JP 2022143657**
**31.03.2023 JP 2023058787**

(43) Date of publication of application:
**13.03.2024 Bulletin 2024/11**

(73) Proprietor: **Ricoh Company, Ltd.**
**Tokyo 143-8555 (JP)**

(72) Inventors:
• **NEMOTO, Taichi**
**Tokyo, 143-8555 (JP)**
• **TANAKA, Chiaki**
**Tokyo, 143-8555 (JP)**
• **SATO, Yuichi**
**Tokyo, 143-8555 (JP)**

(74) Representative: **Rössler, Matthias**
**Karo IP Patentanwälte PartG mbB**
**Steinstraße 16-18**
**40212 Düsseldorf (DE)**

(56) References cited:
**CN-A- 110 628 193    US-A1- 2015 361 214**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

1. Field of the Invention

The present invention relates to polylactic acid resin compositions.

2. Description of the Related Art

In recent years, polylactic acid resins have attracted attention in various fields. This is because polylactic acid is a rare resin having both biodegradability as a feature of bioplastics and features as biomass plastics. Related to the garbage issue, material developments have been actively performed.

The polylactic acid is generally obtained through ring-opening addition polymerization of a cyclic dimer, lactide, that is produced through condensation of lactic acid. Since the polymerization reaction is an equilibrium reaction, the polylactic acid includes a certain amount of an unreacted monomer (ring-opening polymerizable monomer). Also, upon melt molding, the polylactic acid may cause hydrolysis through reaction between a small amount of water and the end hydroxyl or carboxyl group of the polylactic acid. Moreover, compared to polyester including an aromatic ring, aliphatic polyester including polylactic acid greatly decreases in viscosity at temperatures equal to or lower than the melting point thereof, and cannot develop characteristics of non-Newtonian fluids (strain hardening property) related to molding. Also, due to insufficient melt strength thereof, operation becomes unstable in, for example, blow molding. For the above reasons, the aliphatic polyester is regarded as a resin that is not readily molded.

For making the polylactic acid be readily molded, it is proposed to blend other resins having high molecular weights (e.g., polymethyl methacrylate and polyoxymethylene that are relatively favorably compatible to the polylactic acid) (see Non-Patent Document 1). However, this proposal impairs biomass and biodegradability of the polylactic acid, especially compost property. Even if the polylactic acid is blended with a similar material thereto, the recycling property of the resulting blend considerably degrades. Thus, there is a demand for improving moldability of the polylactic acid alone without any other materials.

The polylactic acid has a melting point of 140°C to 175°C, which is sufficiently high in comparison to general-purpose resins such as polystyrene and polyethylene. Drawbacks of the polylactic acid include lower intermolecular interaction than aromatic polyester and polyamide because the polylactic acid is aliphatic polyester. Therefore, the weight average molecular weight of a polylactic acid resin intended for melt molding exceeds 100,000. Industrially preferably, the polylactic acid resin having the above molecular weight is obtained through ring-opening addition polymerization of lactide, a cyclic dimer of lactic acid. However, since transesterification as a competing reaction, cleavage of the molecular chain due to an increase in viscosity, and the like occur as side reactions, the weight average molecular weight of commercially available polylactic acid is 250,000 or lower.

It is also proposed to obtain high-molecular-weight polylactic acid while suppressing such side reactions using supercritical carbon dioxide as a plasticizer (see Patent Document 1). However, there is an issue that melt stability is lacking just by increasing the molecular weight.

The melt stability of a polymer is a factor to consider for stably performing molding. It is generally known to add such an additive as carbodiimide for ensuring the melt stability (see Non-Patent Document 2). In general, however, addition of a large amount of a low-molecular-weight component causes issues such as bleed-out occurring as the polylactic acid becomes crystallized especially when the polylactic acid is stretched into, for example, a yarn or film. Patent Document 2 discloses the preparation of a heat resistant polylactic acid. In examples 1-3, a lactide monomer is reacted in the presence of a catalyst, being tin or stannous compound, and in the presence of an end-capping being benzoic acid. Polylactic acid is obtained.

An object of the present invention is to provide a polylactic acid resin composition having biodegradability and being excellent in melt stability.

SUMMARY OF THE INVENTION

According to the present invention, a polylactic acid resin composition includes a polylactic acid resin in an amount of 99% by mass or more. A complex viscosity $\eta^{*}{}_{(20)}$ of the polylactic acid resin composition is $2 \times 10^3$ Pa·s or higher. A ratio of the complex viscosity $\eta^{*}{}_{(20)}$ to a complex viscosity $\eta^{*}{}_{(5)}$, which is represented by $[\eta^{*}{}_{(20)}/\eta^{*}{}_{(5)}]$, is 0.6 or higher. The complex viscosity $\eta^{*}{}_{(5)}$ and the complex viscosity $\eta^{*}{}_{(20)}$ are complex viscosities respectively measured 5 minutes and 20 minutes after the start of measurement using a parallel plate-type rotary viscometer under measurement conditions below:

[Measurement Conditions]

- Parallel plates: 20 mm in diameter, made of aluminum;
- Temperature: 200°C;
- Gap between the parallel plates: 1.00 mm;
- Frequency: 1 Hz (6.28 rad/s);
- Atmosphere: under dry air (dew point: -60°C); and
- Size of measurement sample: a strip that is 30 μm thick, 7 mm wide, and 35 mm long.

A weight average molecular weight of the polylactic acid resin is 300,000 or higher and 1,000,000 or lower.

Advantageous Effects of the Invention

According to the present invention, it is possible to provide a polylactic acid resin composition having biodegradability and being excellent in melt stability.

BRIEF DESCRIPTION OF THE DRAWINGS

FIG. 1 is a phase diagram illustrating states of a substance with respect to the temperature and pressure of a compressible fluid that is suitably used for production of the polylactic acid resin composition of the present invention;

FIG. 2 is a phase diagram for defining a range of the compressible fluid that is suitably used for production of the polylactic acid resin composition of the present invention; and

FIG. 3 is a view illustrating one example of a continuous polymerization apparatus that is suitably used for production of the polylactic acid resin composition of the present invention.

DESCRIPTION OF EMBODIMENTS

(Polylactic acid resin composition)

A polylactic acid resin composition of a first aspect of the present invention includes a polylactic acid resin, and if necessary, further includes other components.

An amount of the polylactic acid resin is 99% by mass or more with respect to the total mass of the polylactic acid resin composition.

Also, a complex viscosity $\eta^*_{(20)}$ of the polylactic acid resin composition of the present invention is $2 \times 10^3$ Pa·s or higher. A ratio of the complex viscosity $\eta^*_{(20)}$ to a complex viscosity $\eta^*_{(5)}$, which is represented by [$\eta^*_{(20)}/\eta^*_{(5)}$], is 0.6 or higher. The complex viscosity $\eta^*_{(5)}$ and the complex viscosity $\eta^*_{(20)}$ are complex viscosities respectively measured 5 minutes and 20 minutes after the start of measurement using a parallel plate-type rotary viscometer under measurement conditions as described below.

Also, a weight average molecular weight of the polylactic acid resin is 300,000 or higher and 1,000,000 or lower.

A polylactic acid resin composition of a second aspect of the present invention is a polylactic acid resin composition of the first aspect above, comprising: polylactic acid obtained through ring-opening addition polymerization of lactide using a tin-based compound as a metal catalyst; and monocarboxylic acid or monocarboxylic anhydride, and if necessary, further includes other components.

In the following, the polylactic acid resin composition of the second aspect will be described in conjunction with the polylactic acid resin composition of the first aspect.

Conventionally, there has been a big issue that the polylactic acid lacks stability upon melting in molding. From the molecular structure thereof, the polylactic acid has a molecular weight higher than polyamide, polyester, or the like used for melt molding. In general, however, the polylactic acid having a weight average molecular weight of from about 100,000 to about 200,000 is used. Even the polylactic acid having such a molecular weight does not have enough melt strength, and degrades during the molding. As a result, for example, the strength of the polylactic acid decreases over time and the moldability thereof deteriorates.

The present inventors conducted intensive studies for addressing the above issue, and have found that the polylactic acid resin composition of the present invention satisfying the above requirements has biodegradability and is excellent in melt stability, and further excellent in moldability.

[Complex viscosities $\eta^*$]

The complex viscosity $\eta^*_{(20)}$ of the polylactic acid resin composition is $2\times10^3$ Pa·s or higher. The ratio of the complex viscosity $\eta^*_{(20)}$ to the complex viscosity $\eta^*_{(5)}$, which is represented by $[\eta^*_{(20)}/\eta^*_{(5)}]$, is 0.6 or higher. The complex viscosity $\eta^*_{(5)}$ and the complex viscosity $\eta^*_{(20)}$ are the complex viscosities respectively measured 5 minutes and 20 minutes after the start of measurement using a parallel plate-type rotary viscometer (ARES-G2, available from TA Instruments, Inc.) under measurement conditions below:

[Measurement Conditions]

- Parallel plates: 20 mm in diameter, made of aluminum;
- Temperature: 200°C;
- Gap between the parallel plates: 1.00 mm;
- Frequency: 1 Hz (6.28 rad/s);
- Atmosphere: under dry air (dew point: -60°C); and
- Size of measurement sample: a strip that is 30 $\mu$m thick, 7 mm wide, and 35 mm long.

Note that, the measurement sample for the complex viscosity $\eta^*$ can be prepared in the following manner.

Specifically, the polylactic acid resin composition in the form of a pellet is dried at 80°C for about 12 hours. On a jig for measurement, the resulting product is maintained from 3 minutes to 5 minutes at a temperature 20°C higher than the melting point of the polylactic acid resin in the polylactic acid resin composition, and melted. Subsequently, the resulting product is pressed until the gap between the parallel plates reaches 1.05 mm. Next, the polylactic acid-including composition outflowing from the circumferential portion of the parallel plates is scraped off with, for example, a spatula. The resulting product is pressed again until the gap between the parallel plates reaches 1.00 mm. The resulting product is left to stand still for from 3 minutes to 5 minutes to remove residual stress, thereby preparing the measurement sample having the above-described size.

-Complex viscosity $\eta^*_{(20)}$-

The complex viscosity $\eta^*_{(20)}$ of the polylactic acid resin composition is $2\times10^3$ Pa·s or higher, but is preferably $2.5\times10^3$ Pa·s or higher, more preferably $5\times10^3$ Pa·s or higher, and further preferably $1\times10^4$ Pa·s or higher. When the complex viscosity $\eta^*_{(20)}$ of the polylactic acid resin composition is lower than $2\times10^3$ Pa·s, it is not possible to ensure melt strength necessary for molding of the polylactic acid resin composition. No particular limitation is imposed on the upper limit of the complex viscosity $\eta^*_{(20)}$ of the polylactic acid resin composition, which may be appropriately selected in accordance with the intended purpose. From the viewpoints of favorable flowability and moldability, the upper limit of the complex viscosity $\eta^*_{(20)}$ is preferably $5\times10^4$ Pa·s or lower and more preferably $2\times10^4$ Pa·s or lower.

-Ratio $[\eta^*_{(20)}/\eta^*_{(5)}]$-

The ratio $[\eta^*_{(20)}/\eta^*_{(5)}]$ of the polylactic acid resin composition is 0.6 or higher, but is preferably 0.7 or higher and more preferably 0.8 or higher. When the ratio $[\eta^*_{(20)}/\eta^*_{(5)}]$ of the polylactic acid resin composition is lower than 0.6, molded bodies of the polylactic acid resin composition cause variation in quality and failures. Also, the ratio $[\eta^*_{(20)}/\eta^*_{(5)}]$ of the polylactic acid resin composition is preferably higher. Thus, no particular limitation is imposed on the upper limit of the ratio $[\eta^*_{(20)}/\eta^*_{(5)}]$, which may be appropriately selected in accordance with the intended purpose.

Also, further preferably, the complex viscosity $\eta^*_{(20)}$ of the polylactic acid resin composition is $5\times10^3$ Pa·s or higher, and the ratio $[\eta^*_{(20)}/\eta^*_{(5)}]$ is 0.7 or higher.

Also, no particular limitation is imposed on the ratio $[\eta^*_{(20)}/\eta^*_{(5)}]$ of the complex viscosity $\eta^*_{(20)}$ to the complex viscosity $\eta^*_{(5)}$, and the ratio $[\eta^*_{(20)}/\eta^*_{(5)}]$ may be appropriately selected in accordance with the intended purpose. The complex viscosity $\eta^*_{(5)}$ and the complex viscosity $\eta^*_{(20)}$ are obtained by measuring a measurement sample for the complex viscosity $\eta^*$ under the above-described measurement conditions using the parallel plate-type rotary viscometer (ARES-G2, available from TA Instruments, Inc.). The measurement sample for the complex viscosity $\eta^*$ is obtained by drying the polylactic acid resin composition in the form of a pellet at 80°C for about 12 hours, and further leaving the resulting product to stand still for one day in an environment of 23°C and 50RH%. The ratio $[\eta^*_{(20)}/\eta^*_{(5)}]$ is preferably 0.6 or higher, more preferably 0.7 or higher, and further preferably 0.8 or higher. It is preferable that the ratio $[\eta^*_{(20)}/\eta^*_{(5)}]$ remain unchanged even after the polylactic acid resin composition has been left to stand still for one day in an environment of 23°C and 50RH%. This is because a molded product obtained from the polylactic acid resin composition does not change in quality due to environmental changes upon the molding, especially due to humidity.

The melting point of the polylactic acid resin is approximately within a range of from 140°C to 175°C.

As described above, the complex viscosity $\eta^*_{(20)}$ of the polylactic acid resin composition is $2\times10^3$ Pa·s or higher, and the ratio $[\eta^*_{(20)}/\eta^*_{(5)}]$ is 0.6 or higher. Therefore, the polylactic acid resin composition does not decrease in viscosity so much even at temperatures equal to or lower than the melting point of the polylactic acid resin, and can develop characteristics of non-Newtonian fluids (strain hardening property) related to molding and excels in melt stability. Thereby, the polylactic acid resin composition can achieve stable operation, for example, molding of sheets and foamed sheets as well as blow molding, and is excellent in moldability.

The melting point of the polylactic acid resin is determined through differential scanning calorimetry (DSC) according to JIS K 7122-1987 (Testing Methods for Heat of Transitions of Plastics).

Specifically, for DSC measurement of the melting point of the polylactic acid resin, for example, a differential scanning calorimeter (e.g., Model Q-2000, available from TA Instruments, Inc.) can be used. The polylactic acid resin composition in the form of a pellet is cut with, for example, scissors or nippers, thereby forming a measurement sample. The measurement sample of from 5 mg to 10 mg is placed in a dedicated pan available from TA Instruments, Inc., and subjected to measurement. The measurement sample is placed in a vessel of the differential scanning calorimeter, and heated from 10°C to 200°C at a heating rate of 10 °C/min. The melting point of the polylactic acid resin refers to a peak top temperature of an endothermic peak observed in a temperature range equal to or higher than the glass transition temperature, when after the 1st cooling, the measurement sample is heated again from 25°C to 200°C for scanning at a rate of 10 °C/min.

[Biodegradability]

The polylactic acid resin composition is excellent in biodegradability, especially in compost property.

As used herein, "biodegradability" refers to an ability to degrade by the action of biological organisms such as microorganisms in the natural world.

As used herein, "compost property" refers to having the biodegradability at 58°C.

The biodegradability of the polylactic acid resin composition can be confirmed according to ISO 14855-1 or ISO 14855-2.

[Yellowness index]

The polylactic acid resin composition is preferably free of yellowing.

Being free of yellowing in the polylactic acid resin composition can be confirmed by measuring a yellowness index (YI) according to JIS K 7103:1977 (Testing methods for yellowness index and change of yellowness index of plastics).

Specifically, a 2 mm-thick pellet of the polylactic acid resin composition is used as a measurement sample, and measured using a color meter (SM-T, available from Suga Test Instruments Co., Ltd.) to determine the yellowness index (YI). The YI is preferably 25 or lower, more preferably 15 or lower, further preferably 9 or lower, and particularly preferably 6 or lower. The polylactic acid resin composition having the YI of 25 or lower is a favorable polylactic acid resin composition free of coloring.

[Melt mass-flow rate (MFR)]

No particular limitation is imposed on the melt mass-flow rate (MFR) of the polylactic acid resin composition determined at 190°C and at a load of 2.16 kg according to JIS K 7210-1:2014, and the melt mass-flow rate (MFR) thereof may be appropriately selected in accordance with the intended purpose. However, the melt mass-flow rate (MFR) of the polylactic acid resin composition is preferably 2 g/10 min or lower and more preferably 1 g/10 min or lower. Since the melt mass-flow rate (MFR) of the polylactic acid resin composition is preferably lower, no particular limitation is imposed on the lower limit thereof, which may be appropriately selected in accordance with the intended purpose. The polylactic acid resin composition has biodegradability and is excellent in melt stability. The polylactic acid resin composition preferably includes a straight-chain polylactic acid resin, and thus the melt mass-flow rate (MFR) can be 2 g/10 min or lower, which is preferable from the viewpoint of preventing gelation. The melt mass-flow rate (MFR) of the polylactic acid composition can be readily controlled by adjusting, for example, the molecular weight, the amount of the residual monomers, and the optical purity of the polylactic acid resin in the polylactic acid resin composition.

<Polylactic acid resin>

From the viewpoint of the recycling property, the amount of the polylactic acid resin in the polylactic acid resin composition is 99% by mass or more with respect to the total mass of the polylactic acid resin composition, and preferably 99.5% by mass or more. Therefore, organic substances in the polylactic acid resin composition are mainly the polylactic acid resin. Examples of the organic substances other than the polylactic acid resin include: additives such as hydrolysis inhibitors and antioxidants described below; initiators; catalysts; and fillers.

The polylactic acid resin is one of the aliphatic polyester resins, and is biodegraded by microorganisms. Thus, the polylactic acid resin has attracted attention as an environmentally-friendly polymer material with a low environmental load (see "Structure, Physical Properties, and Biodegradability of Aliphatic Polyester", Yoshio Inoue, Polymer, 2001, Vol. 50, No. 6, pp. 374-377).

As long as the amount of the polylactic acid resin is 99% by mass or more with respect to the total mass of the polylactic acid resin composition, no particular limitation is imposed on the polylactic acid resin, which may be appropriately selected in accordance with the intended purpose. Examples of the polylactic acid resin include polylactic acid, and polymer blends of polylactic acid and polymers other than the polylactic acid. These may be used alone or in combination. The polylactic acid resin may be an appropriately synthesized polylactic acid resin or may be a commercially available polylactic acid resin.

Examples of the polylactic acid include: homopolymers of a D form of lactic acid (D-lactic acid) or an L form of lactic acid (L-lactic acid); copolymers of D-lactic acid and L-lactic acid (poly DL-lactic acid); and ring-opening polymers of one or more lactides selected from the group consisting of a D form of lactide (D-lactide), an L form of lactide (L-lactide), and copolymers of D-lactide and L-lactide (poly DL-lactide).

When the polylactic acid is a copolymer, the copolymer may be a random copolymer, an alternating copolymer, a block copolymer, or a graft copolymer in terms of the way the monomers thereof are arranged.

The optical purity of the lactic acid or the lactide, which is a raw material monomer of the polylactic acid resin, directly impacts the optical purity of the polylactic acid resin in the polylactic acid resin composition. The optical purity of the polylactic acid resin is associated with the crystallization speed or the melting point, and can be adjusted. The lactic acid or the lactide, which is a raw material monomer of the polylactic acid resin, may be a mixture including a D form or an L form in an amount of from about 0.01% by mass to about 10% by mass.

The polymer blend may be appropriately selected from publicly known polymer blends including polylactic acid, in accordance with the intended applications or desired physical properties of the polylactic acid resin composition. Examples thereof include polymer blends of the polylactic acid and biodegradable polymers other than the polylactic acid or monomers thereof.

Specific examples of the polymer blends include: copolymers of the polylactic acid and poly(3-hydroxybutyrate), poly($\varepsilon$-caprolactone), or poly(butylene succinate), or monomers thereof; copolymers of the polylactic acid and a polyalkylene resin for imparting flexibility; copolymers of the polylactic acid and a carbodiimide compound serving as a component of a transparent nucleating agent; copolymers of the polylactic acid and polysiloxane; copolymers of the polylactic acid and aliphatic carboxylic acid amide; copolymers of the polylactic acid and aliphatic carboxylic acid; copolymers of the polylactic acid and aliphatic alcohol; copolymers of the polylactic acid and aliphatic carboxylic acid ester; copolymers of the polylactic acid and modified polylactide formed through urethanization cross-linkage of (poly)ethylene oxide-added bisphenol A with an isocyanate-based compound in the presence of an amidation catalyst for improving heat resistance; a resin alloy in which a polyethylene (PET) resin or a polybutylene (PBT) resin is blended in the polylactic acid; a resin alloy in which the polylactic acid and polysiloxane/acrylic composite rubber for improving impact resistance are blended; graft copolymers of polylactic acid-acrylate-polysiloxane; vinylpyrrolidone/L-lactic acid copolymers; sucrose/L-lactic acid copolymers; glycolic acid/L-lactic acid copolymers; and glycolide/L-lactide copolymers. These may be used alone or in combination.

When the ring-opening polymer of one or more monomers selected from the group consisting of DL-lactic acid, D-lactide, L-lactide, and DL-lactide is used as the polylactic acid resin, as a smaller amount from among optical isomers; i.e., a D form or an L form decreases, crystallization increases to thereby increase the melting point or crystallization speed, resulting in the tendency to increase the melting point or glass transition temperature. Also, as a smaller amount from among optical isomers; i.e., a D form or an L form increases, crystallization decreases to thereby eventually become amorphous.

The amount (optical purity) of D-lactic acid or L-lactic acid as a constituting monomer unit of the polylactic acid resin in the polylactic acid resin composition is associated with heat resistance and molding temperature of a molded body of the polylactic acid resin composition. Therefore, as long as the amount (optical purity) thereof is adjusted in accordance with the intended applications, no particular limitation is imposed thereon. However, the amount of L-lactic acid is preferably larger, more preferably 90% by mole or more, and further preferably 95% by mole or more. When the amount of L-lactic acid in the constituting monomer unit of the polylactic acid resin is 90% by mole or more, the polylactic acid resin has crystallinity, which is however varied with the intended moldability, and can ensure mechanical strength and heat resistance as a molding material.

The optical purity of the polylactic acid resin can be measured through high performance liquid chromatography (HPLC).

Specifically, the polylactic acid resin composition is frozen and crushed, and 0.1 g of the powder is weighed and added to 5 mL of a 1N aqueous sodium hydroxide solution. The mixture is refluxed for about 4 hours at room temperature (25°C) for hydrolysis. The solution after refluxing is neutralized with 1 mol/L sulfuric acid to prepare a measurement sample. The measurement sample is subjected to HPLC analysis under analysis conditions below. Also, a reference sample of L-lactic acid and a reference sample of D-lactic acid are subjected to HPLC analysis in the same manner to previously create respective calibration curves.

From peak areas of L-lactic acid and D-lactic acid obtained through HPLC analysis, the amounts thereof are calculated based on the calibration curves, and the optical purity of L-lactic acid can be calculated based on formula (1) below. Also, the optical purity of D-lactic acid can be calculated based on formula (2) below.

Optical purity (%) of L-lactic acid = 100×(Amount of L form - Amount of D form)/(Amount of L form + Amount of D form) ... Formula (1)        Formula (1)

Optical purity (%) of D-lactic acid = 100×(Amount of D form - Amount of L form)/(Amount of L form + Amount of D form) ... Formula (2)        Formula (2)

In the formula (1) and the formula (2), "Amount of L form" indicates an amount (% by mass) of L-lactic acid obtained through HPLC analysis, and "Amount of D form" indicates an amount (% by mass) of D-lactic acid obtained through HPLC analysis.

[Analysis Conditions]

- Device: PU-2085 plus series (available from JASCO Corporation)
- Column: Chromolith (registered trademark) coated with SUMICHIRAL OA-5000 (inner diameter: 4.6 mm, length: 150 mm, available from Sumika Chemical Analysis Service, Ltd.)
- Column temperature: 25°C
- Mobile phase: a liquid mixture of a 2 mM $CuSO_4$ aqueous solution and 2-propanol (2 mM $CuSO_4$ aqueous solution:2-propanol = 95:5 (volume ratio))
- Flow rate: 1.0 mL/min
- Detector: UV (254 nm)
- Injection amount: 20 $\mu$L

The weight average molecular weight (Mw) of the polylactic acid resin, which may be appropriately selected in accordance with the intended purpose, is 300,000 or higher and 1,000,000 or lower and preferably 350,000 or higher and 500,000 or lower. When the weight average molecular weight (Mw) of the polylactic acid resin is 300,000 or higher and 1,000,000 or lower, the polylactic acid resin can be successfully molded into, for example, a sheet or a yarn, and a molded body having high strength can be obtained. When the polylactic acid resin having the weight average molecular weight (Mw) of 300,000 or higher is molded into a sheet, the polylactic acid resin can sufficiently develop melt strength and strain hardening property, and the intended sheet molding, spinning, and the like can be suitably performed. The polylactic acid resin having the weight average molecular weight (Mw) of 1,000,000 or lower does not become too high in viscosity, and gives less burden to facilities upon processing and thereby can achieve stable production.

No particular limitation is imposed on a molecular distribution (Mw/Mn) calculated by dividing the weight average molecular weight (Mw) of the polylactic acid resin by the number average molecular weight (Mn) thereof, which may be appropriately selected in accordance with the intended purpose. However, the molecular distribution (Mw/Mn) is preferably from 1.3 to 2.4 and more preferably from 1.5 to 2.2. When the molecular distribution (Mw/Mn) is from 1.3 to 2.4, unintended side reactions in the polymerization reaction, such as degradation and cross-linking reaction, do not occur, which is preferable.

The molecular weight of the polylactic acid resin in the polylactic acid resin composition can be measured through gel permeation chromatography (GPC).

Specifically, the polylactic acid resin composition is dissolved in chloroform to have a concentration of 0.5% by mass, thereby preparing a measurement sample. The prepared measurement sample (1 mL) is injected and measured under analysis conditions below. Separately, monodispersed polystyrene reference samples are subjected to gel permeation chromatography in the same manner to previously create a calibration curve for molecular weights.

From the molecular weight distribution (Mw/Mn) of the polylactic acid resin composition, the number average molecular weight (Mn) and the weight average molecular weight (Mw) of the polylactic acid resin in the polylactic acid resin composition can be calculated using the calibration curve for molecular weights.

[Analysis Conditions]

- Device: GPC-8020 (available from TOSOH CORPORATION)
- Column: TSKgel (registered trademark) G2000HXL and G4000HXL (available from TOSOH CORPORATION)
- Temperature: 40°C
- Solvent: Chloroform
- Injection amount: 1 mL
- Flow rate: 1.0 mL/min

As long as the amount of the polylactic acid resin is 99% by mass or more with respect to the total mass of the polylactic acid resin composition, no particular limitation is imposed on the amount of the polylactic acid resin, which may be appropriately selected in accordance with the intended purpose. However, the amount of the polylactic acid resin is 99.5% by mass or more with respect to the total mass of the polylactic acid resin composition, more preferably 99.7% by mass or more, and further preferably 99.9% by mass or more. When the amount of the polylactic acid resin is 99% by mass or more, the polylactic acid resin composition excels in recycling property and biodegradability. Note that, the polylactic acid resin composition may consist of the polylactic acid resin (i.e., the amount of the polylactic acid resin is 100% by mass).

<Other components>

No particular limitation is imposed on the other components in the polylactic acid resin composition, which may be appropriately selected in accordance with the intended purpose. Examples thereof include initiators, catalysts, and various additives. These may be used alone or in combination.

<<Initiator>>

The initiator is used for controlling the molecular weight of the polylactic acid resin in the ring-opening addition polymerization reaction of the polylactic acid resin.
No particular limitation is imposed on the initiator, which may be appropriately selected in accordance with the intended purpose. However, the inhibitor is preferably an inhibitor having active hydrogen, examples of which include alcohol-based initiators.
The alcohol-based initiator may be monoalcohol or polyvalent alcohol of aliphatic alcohol. Alternatively, the alcohol-based initiator may be saturated alcohol or unsaturated alcohol.
Specific examples of the initiator include monoalcohol, polyvalent alcohol, and lactic acid ester. These initiators may be used alone or in combination.
Examples of the monoalcohol include methanol, ethanol, propanol, butanol, pentanol, hexanol, heptanol, nonanol, decanol, lauryl alcohol, myristyl alcohol, cetyl alcohol, and stearyl alcohol.
Examples of the polyvalent alcohol include: diols such as ethylene glycol, 1,2-propanediol, 1,3-propanediol, 1,3-butanediol, 1,4-butanediol, 1,6-hexanediol, nonanediol, tetramethylene glycol, and polyethylene glycol; and glycerol, sorbitol, xylitol, ribitol, erythritol, triethanolamine, and pentaerythritol.
Examples of the lactic acid ester include methyl lactate and ethyl lactate.
No particular limitation is imposed on the amount of the initiator, which may be appropriately selected in accordance with the molecular weight of the intended polylactic acid resin. However, the amount of the initiator with respect to 1 mole of the monomer is preferably 1/10,000 mole or less, more preferably 1/20,000 mole or less, and further preferably 1/40,000 mole or less.
No particular limitation is imposed on the water content of the initiator, which may be appropriately selected in accordance with the intended purpose. However, preferably, the initiator to be used is sufficiently dried to reduce the water content thereof. The water content of the initiator is more preferably 100 ppm or less, further preferably 50 ppm or less, and particularly preferably 10 ppm or less.

<<Catalyst>>

No particular limitation is imposed on the catalyst, which may be appropriately selected in accordance with the intended purpose. Examples thereof include organic catalysts and metal catalysts. The catalyst is used for production of the polylactic acid resin, especially polymerization of the raw material monomer of the polylactic acid resin.

-Organic catalyst-

No particular limitation is imposed on the organic catalyst, which may be appropriately selected in accordance with the intended purpose. For example, the organic catalyst is preferably free of a metal atom, contributes to the ring-opening polymerization reaction of the ring-opening polymerizable monomer, and leaves and regenerates through reaction with alcohol after forming an active intermediate with the ring-opening polymerizable monomer.

For example, in the case of polymerizing the ring-opening polymerizable monomer having an ester bond, the organic catalyst is preferably a (nucleophilic) compound having basicity and serving as a nucleophilic agent, more preferably a compound including a nitrogen atom, and particularly preferably a cyclic compound including a nitrogen atom. No particular limitation is imposed on such a compound, which may be appropriately selected in accordance with the intended purpose. Examples thereof include cyclic monoamines, cyclic diamines (e.g., cyclic diamine compounds having an amidine skeleton), cyclic triamine compounds having a guanidine skeleton, heterocyclic aromatic organic compounds including a nitrogen atom, and N-heterocyclic carbene. These may be used alone or in combination.

Examples of the cyclic monoamines include quinuclidine.

Examples of the cyclic diamines include 1,4-diazabicyclo[2.2.2]octane (DABCO) and 1,5-diazabicyclo(4,3,0)-5-nonene.

Examples of the cyclic diamine compounds having the amidine skeleton include 1,8-diazabicyclo[5.4.0]undec-7-ene (DBU) and diazabicyclononene.

Examples of the cyclic triamine compounds having the guanidine skeleton include 1,5,7-triazabicyclo[4.4.0]dec-5-ene (TBD) and diphenylguanidine (DPG).

Examples of the heterocyclic aromatic organic compounds including the nitrogen atom include N,N-dimethyl-4-aminopyridine (DMAP), 4-pyrrolidinopyridine (PPY), pyrrocolin, imidazole, pyrimidine, and purine.

Examples of the N-heterocyclic carbene include 1,3-di-tert-butylimidazol-2-ylidene (ITBU).

Of these, the organic catalyst is preferably 1,4-diazabicyclo[2.2.2]octane (DABCO), 1,8-diazabicyclo[5.4.0]undec-7-ene (DBU), diphenylguanidine (DPG), 1,5,7-triazabicyclo[4.4.0]dec-5-ene (TBD), N,N-dimethyl-4-aminopyridine (DMAP), 4-pyrrolidinopyridine (PPY), or 1,3-di-tert-butylimidazol-2-ylidene (ITBU), because these have high nucleophilicity and little impact due to steric hindrance, or have such boiling points that are removable under reduced pressure.

Note that, a cationic organic catalyst can also be used for the ring-opening polymerization. In this case, however, the cationic organic catalyst takes hydrogen off (back-biting) from a main chain of the polylactic acid resin. Therefore, the molecular weight distribution of the resulting polymer becomes broader, and a product having a high molecular weight is not readily obtained.

Of these organic catalysts, for example, DBU is in the form of liquid at room temperature, and has a boiling point. When such an organic catalyst is selected for use, the organic catalyst can be removed approximately quantitatively from the polylactic acid resin composition by reducing the pressure of the polylactic acid resin composition. Note that, the type of the organic solvent, or whether a removal treatment is performed, can be determined in accordance with the intended use of the polylactic acid resin composition.


-Metal catalyst-

No particular limitation is imposed on the metal catalyst, which may be appropriately selected in accordance with the intended purpose. Examples thereof include compounds exhibiting basicity, such as tin-based compounds, aluminum-based compounds, titanium-based compounds, zirconium-based compounds, and antimony-based compounds. These may be used alone or in combination.

Examples of the tin-based compounds include tin octylate, tin dibutylate, and tin(II) (2-ethylhexanoate).

Examples of the aluminum-based compounds aluminum acetylacetonate and aluminum acetate.

Examples of the titanium-based compounds include tetraisopropyl titanate and tetrabutyl titanate.

Examples of the zirconium-based compounds include zirconium isopropoxide.

Examples of the antimony-based compounds include antimony trioxide.

Of the above catalysts, for production of the polylactic acid resin, the metal catalyst is preferable, the tin-based compounds are more preferable, and tin(II) (2-ethylhexanoate) is further preferable because the polylactic acid resin having a higher molecular weight is readily produced. In the case of using the tin-based compounds as the metal catalyst, preferably in the case of using the tin-based compounds as the metal catalyst to perform the ring-opening addition polymerization of the lactide that is the raw material monomer of the polylactic acid resin, the tin atom is coordinated in the skeleton of the polylactic acid resin in the obtained polylactic acid resin composition.

No particular limitation is imposed on the water content of the metal catalyst, which may be appropriately selected in accordance with the intended purpose. However, the metal catalyst to be used is sufficiently dried to reduce the water content thereof. The water content of the metal catalyst is more preferably 100 ppm or less, further preferably 50 ppm or less, and particularly preferably 10 ppm or less.

No particular limitation is imposed on the amount of the catalyst, which may be appropriately selected in accordance with the intended purpose. For example, the amount of the tin-based compound serving as the metal catalyst can be determined through ICP emission spectrometry.

<<Additive>>

No particular limitation is imposed on the additive, which may be appropriately selected in accordance with the intended purpose. Examples thereof include hydrolysis inhibitors, antioxidants, stabilizers, polymerization terminators, surfactants, anti-clouding agents, UV ray-absorbers, pigments, colorants, fillers, heat stabilizers, light-resistant agents, flame retardants, crystal nucleating agents, anti-charging agents, surface-wettability improvers, incineration adjuvants, lubricants, natural products, release agents, plasticizers, entrainers, unreacted monomers, and other similar components. These may be used alone or in combination.

As long as the effects of the present invention are not impaired, no particular limitation is imposed on the amount of the additive, which may be appropriately selected in accordance with the intended purpose. Note that, in the process of producing the polylactic acid resin having a high molecular weight, it becomes possible to ensure melt stability of the polylactic acid resin composition while using no additive or minimizing the additive. Therefore, from the viewpoints of the biodegradability, melt stability, and moldability of the polylactic acid resin composition, and of being free of yellowing, preferably, the polylactic acid resin composition is substantially free of the additive. The amount of the additive is more preferably less than 1% by mass and further preferably less than 0.5% by mass, with respect to the total mass of the polylactic acid resin composition.

-Hydrolysis inhibitor-

In general, when the polylactic acid is subjected to melt molding, hydrolysis may occur through reaction between a small amount of water and the end hydroxyl or carboxyl group of the polylactic acid resin. Therefore, the polylactic acid resin composition preferably further includes a hydrolysis inhibitor to bind to a reactive group that is a hydroxyl group, a carboxyl group, or both included in the polylactic acid resin.

As long as the hydrolysis inhibitor binds to the reactive group that is the hydroxyl group, the carboxyl group, or both included in the polylactic acid resin, no particular limitation is imposed on the hydrolysis inhibitor, which may be appropriately selected in accordance with the intended purpose. For example, a compound that is widely known as a cross-linking agent such as polyester can be used. Examples of the hydrolysis inhibitor include epoxy-based compounds, organic acid halide-based compounds, isocyanate-based compounds, and carbodiimide-based compounds. These may be used alone or in combination.

Examples of the epoxy-based compounds include those obtained by introducing an epoxy group to a side chain of a methacrylate-based resin (e.g., Joncryl (registered trademark) ADR 4468, available from BASF).

Examples of the organic acid halide-based compounds include 2,4,6-trimercapto-s-triazine (e.g., ACTOR TSH, available from Kawaguchi Chemical Industry Co., LTD.).

Examples of the isocyanate-based compounds include polyisocyanates (e.g., BURNOCK DNW-5500, available from DIC Corporation).

No particular limitation is imposed on the carbodiimide-based compounds, and examples thereof include polycarbodiimide compounds and monocarbodiimide compounds.

Examples of the polycarbodiimide compounds include poly(4,4'-diphenylmethane carbodiimide), poly(4,4'-dicyclohexylmethane carbodiimide), poly(1,3,5-triisopropylbenzene)polycarbodiimide, and poly(1,3,5-triisopropylbenzene and 1,5-diisopropylbenzene)polycarbodiimide.

Examples of the monocarbodiimide compounds include N,N'-di-2,6-diisopropylphenylcarbodiimide.

In the case of using a polyfunctional compound that is tri- or more functional, the polylactic acid resin may be impaired in biodegradability, and may have more end reactive groups (e.g., a hydroxyl group) that are likely to cause hydrolysis. Also, there may be a case of forming, for example, an intramolecular three-dimensional cross-linked polymer (microgel) in which network structures are locally formed. This may form fish eyes in a molded body (e.g., a film) of the polylactic acid resin composition, or may cause troubles in a spinning step of fibers, such as yarn breakage. Therefore, the hydrolysis inhibitor is preferably a difunctional compound and particularly preferably a difunctional carbodiimide compound.

No particular limitation is imposed on the amount of the hydrolysis inhibitor, which may be appropriately selected in accordance with the intended purpose. However, the amount of the hydrolysis inhibitor is preferably less than 1% by mass and more preferably 0.5% by mass or less, with respect to the total mass of the polylactic acid resin composition.

-Antioxidant-

No particular limitation is imposed on the antioxidant, and examples thereof include 3-(3,5-di-tert-butyl-4-hydroxyphenol)propionate (hindered phenol), 2,6-di-t-butyl-4-methylphenol, and butylated hydroxyanisole. These may be used alone or in combination. These antioxidants suppress degradation by radicals upon melting.

-Polymerization terminator-

In general, in the case of producing the polylactic acid through ring-opening polymerization of lactide, a catalyst exhibiting basicity is used. After the polymerization reaction, the catalyst also functions as a catalyst for degradation reaction. Thus, the catalyst is preferably deactivated after the polymerization reaction. An acid component that deactivates the catalyst exhibiting basicity is, for example, benzoic acid, hydrochloric acid, phosphoric acid, a phosphorus-including compound (e.g., metaphosphoric acid), acetic acid, or lactic acid, each of which is known as a secondary antioxidant. These may be used alone or in combination.

No particular limitation is imposed on the amount of the polymerization terminator, which may be appropriately determined in accordance with the amount of the catalyst used for the polymerization reaction as described below.

-Filler-

No particular limitation is imposed on the filler, which may be appropriately selected in accordance with the intended purpose. Examples thereof include inorganic fillers and organic fillers. These may be used alone or in combination.

Examples of the inorganic fillers include talc, kaolin, calcium carbonate, layered silicate, zinc carbonate, wollastonite, silica, alumina, magnesium oxide, calcium silicate, sodium aluminate, calcium aluminate, sodium aluminosilicate, magnesium silicate, glass microballoons, carbon black, zinc oxide, antimony trioxide, zeolite, hydrotalcite, metal fibers, metal whiskers, ceramic whiskers, potassium titanate, boron nitride, graphite, glass fibers, and carbon fibers. These inorganic fillers are suitable for improving the mechanical strength, heat resistance, and coefficient of linear expansion of the molded body of the polylactic acid resin composition.

Examples of the organic fillers include: naturally occurring polymers, such as starch, cellulose particles, wood powder, soy pulp, chaff, and bran, and modified products thereof; and sorbitol compounds, benzoic acid, benzoic acid compounds, metal salts thereof, metal salts of phosphoric acid ester, and rosin compounds.

No particular limitation is imposed on the average particle diameter of the filler, which may be appropriately selected in accordance with the intended purpose. However, the average particle diameter of the filler is preferably from 7 nm to 100 nm.

No particular limitation is imposed on the amount of the filler, which may be appropriately selected in accordance with the intended purpose. However, the amount of the filler is preferably from 0.3% by mass to 5% by mass with respect to the total mass of the polylactic acid resin composition.

-Entrainer-

In general, the entrainer refers to a substance that increases solubility (see Yoshio Iwai, Uchida Hirohisa, "Solubility of High-Boiling-Point Compound in Supercritical Fluid", High Pressure Science and Technology, 1996, Vol. 5, No. 2, pp. 71-77).

In the present invention, the entrainer refers to a substance that increases solubility of the polylactic acid resin composition or a raw material thereof. However, the compressible fluid is not included in the entrainer that is one of the other components, and the entrainer is preferably a substance that assists the action of the compressible fluid.

As long as the entrainer has the above-described actions, no particular limitation is imposed on the entrainer, which may be appropriately selected in accordance with the intended purpose. Examples thereof include publicly known solvents.

As long as the effects of the present invention are not impaired, no particular limitation is imposed on the amount of the entrainer, which may be appropriately selected in accordance with the intended purpose. However, from the viewpoints of the biodegradability, melt stability, and moldability of the polylactic acid resin composition, and of being free of yellowing, preferably, the polylactic acid resin composition is substantially free of the entrainer. The amount of the entrainer is more preferably less than 1% by mass and further preferably 0.5% by mass or less, with respect to the total mass of the polylactic acid resin composition.

-Unreacted monomer-

The polylactic acid is generally obtained through ring-opening addition polymerization of a cyclic dimer, lactide, that is produced through condensation of lactic acid. Since the polymerization reaction is an equilibrium reaction, there may be a case of forming a certain amount of an unreacted monomer (hereinafter may be referred to as, for example, a "residual monomer" or a "residual ring-opening polymerizable monomer"). Therefore, the polylactic acid resin composition may include the unreacted monomer, and no particular limitation is imposed on the amount of the unreacted monomer, which may be appropriately selected in accordance with the intended purpose. However, the amount of the unreacted monomer is preferably 5,000 ppm or less and more preferably 1,000 ppm or less. When the amount of the unreacted monomer included in the polylactic acid resin composition is 5,000 ppm or less, it is possible to ensure melt stability upon production of the molded body of the polylactic acid resin composition.

The amount of the unreacted monomer can be determined according to the measurement method of the amount of the ring-opening polymerizable monomer described in "Voluntary Standards for Polyolefin and Other Synthetic Resin Food Containers and Packaging, 3rd Revised Edition, June 2004 Supplement, Part 3, Hygiene Test Methods, P13".

Specifically, the polylactic acid resin composition (0.1 g) is uniformly dissolved in dichloromethane (5 mL). By addition of a 2 mM $CuSO_4$ aqueous solution/2-propanol=95/5 (volume ratio), the polylactic acid resin composition is re-precipitated. The obtained supernatant is subjected to HPLC, and the unreacted monomer is separated and quantified by the internal standard method under analysis conditions below. Thereby, it is possible to measure the amount of the residual ring-opening polymerizable monomer in the polylactic acid resin composition.

[Analysis Conditions]

- Device: Preparative purification HPLC system (available from JASCO Corporation)
- Analysis column: SUMICHIRAL OA-5000 (inner diameter: 4.6 mm, length: 150 mm, particle diameter: 5 $\mu$m, available from Sumika Chemical Analysis Service, Ltd.)
- Mobile phase: 2 mM $CuSO_4$ aqueous solution/2-propanol=95/5 (volume ratio)
- Internal standard: 2,6-dimethyl-y pyrone
- Flow rate: 1.0 mL/min
- Column temperature: 25°C
- Detector: Photodiode array detector (PDA) (UV: 254 nm)
- Injection amount upon measurement: 20 $\mu$L

<Production method of polylactic acid resin composition>

The production method of the polylactic acid resin composition of the present invention includes: a polymerization step of performing polymerization reaction of a raw material that is a D form of lactic acid, an L form of lactic acid, a D form of lactide, an L form of lactide, or any combination thereof, so that an amount of a polylactic acid resin becomes 99% by mass or more, and a complex viscosity $\eta^*_{(20)}$ of the polylactic acid resin composition becomes $2 \times 10^3$ Pa·s or higher and a ratio of the complex viscosity $\eta^*_{(20)}$ to a complex viscosity $\eta^*_{(5)}$, which is represented by $[\eta^*_{(20)}/\eta^*_{(5)}]$, becomes 0.6 or higher, where the complex viscosity $\eta^*_{(5)}$ and the complex viscosity $\eta^*_{(20)}$ are complex viscosities respectively measured 5 minutes and 20 minutes after the start of measurement using a parallel plate-type rotary viscometer under the measurement conditions described in the specification. If necessary, the production method of the polylactic acid resin composition of the present invention may further include other steps such as a raw material mixing and melting step, a polymerization terminating step, a monomer removing step, and an additive addition step.

No particular limitation is imposed on a polymerization apparatus used for production of the polylactic acid resin composition, which may be appropriately selected in accordance with the intended purpose. Both a continuous polymerization process and a batch process can be employed as a reaction process. It is preferable to use a polymerization apparatus that is adaptable to the melt viscosity of the polylactic acid resin composition in each of the steps. Of these, a polymerization apparatus for a continuous polymerization process is preferably selected in consideration of, for example, efficient use of the apparatus, and properties and quality of the product. Further, if necessary, it is preferable to use a continuous polymerization process that is adaptable to: the step of mixing the raw material monomer (e.g., lactide) of the polylactic acid resin composition and other optional materials such as the catalyst and the initiator; and the viscosity of the product in each step. This is because polylactide including lactide in an amount of from 10% by mass to 30% by mass greatly decreases in melt viscosity compared to polylactide including lactide in an amount less than 10% by mass.

No particular limitation is imposed on the melt viscosity of the polylactic acid resin composition. It is difficult to flatly specify the melt viscosity because of, for example, the feed, flow rate, monomer conversion rate, and reaction temperature. The melt viscosity of the polylactic acid resin composition is preferably 600 Pa·s or lower and more preferably 300 Pa·s or lower. When the melt viscosity of the polylactic acid resin composition does not exceed 600 Pa·s, a normal vertical polymerization vessel can be used.

Examples of the vertical polymerization vessel include melt polymerization apparatuses equipped with a publicly known stirring blade for materials having a low to medium viscosity, such as an anchor blade polymerization vessel, a tilt blade polymerization vessel, a spirally scraping blade polymerization vessel, a FULLZONE blade polymerization vessel, a MAXBLEND blade polymerization vessel, and a LOGBORN blade polymerization vessel. Of these, a vertical polymerization vessel equipped with a FULLZONE blade, which can efficiently mix the raw material monomer (e.g., lactide) of the polylactic acid resin composition and other optional materials such as the catalyst and the initiator and can efficiently remove heat of ring-opening polymerization, and a vertical polymerization vessel equipped with an anchor blade suitable for polymerization of a prepolymer having a relatively high melt viscosity are preferably used in series.

Also, when the melt viscosity of the polylactic acid resin composition exceeds 600 Pa·s, a polymerization apparatus suitable for production of a resin having a relatively high melt viscosity can be preferably used. Here, it is necessary to remove heat of reaction while suppressing transesterification and cleavage of the molecular chains that are side reactions of the polymerization reaction of the monomer (e.g., lactide). Examples of the polymerization apparatus usable include single-screw extruders, twin-screw extruders, kneaders, screw-less basket-shaped stirring vessels, BIVOLAK (available from Sumitomo Heavy Industries, Ltd.), N-SCR (available from Mitsubishi Heavy Industries, Ltd.), and tube-shaped polymerization vessels equipped with a spectacle-shaped blade (available from Hitachi, Ltd.), a lattice blade, or a Kenix-type or Sulzer-type SMLX-type static mixer. In terms of color tone of polylactic acid resin composition, the polymerization apparatus suitably usable is a finisher that is a self-cleaning-type polymerization apparatus, N-SCR, a twin-screw extruder, or the like. Of these, a twin-screw extruder is particularly preferably used as the polymerization apparatus in terms of kneading performance, production efficiency, and color tone, stability, and heat resistance of the polylactic acid resin composition, and the like.

When the continuous polymerization process is used, it is preferable to use a charged materials-melting vessel before using the polymerization apparatus. No particular limitation is imposed on the charged materials-melting vessel. However, it is preferable to use the FULLZONE blade polymerization vessel that can achieve efficient stirring.

<<Raw material mixing and melting step>>

The raw material mixing and melting step is performed before the polymerization step and is a step of mixing and melting raw materials of the polylactic acid resin composition (acetic acid, lactide, other monomers, and if necessary, the above-described other components and the like) .

No particular limitation is imposed on the method of melting the raw materials, which may be appropriately selected in accordance with the intended purpose. Examples thereof include heating and melting the raw materials of the polylactic acid resin composition.

As long as the raw materials can be mixed and melted, no particular limitation is imposed on the heating temperature upon mixing and melting the raw materials, which may be appropriately selected in accordance with the intended purpose. However, the heating temperature is preferably a temperature equal to or higher than the melting temperature of the monomer of the polylactic acid resin, more preferably 100°C or higher, and further preferably from 105°C to 130°C. By setting the temperature in the melting step to be a temperature equal to or higher than the melting temperature of the monomer of the polylactic acid resin, it is possible to mix and melt the raw materials.

In the polymerization step, the above-described catalyst can be used. In the raw material mixing step, the catalyst may be previously added as the raw materials.

No particular limitation is imposed on the amount of the catalyst used, which may be appropriately selected in accordance with the intended purpose. However, the amount of the catalyst is preferably 50 ppm or more and 5,000 ppm or less and more preferably 100 ppm or more and 1,000 ppm or less, with respect to the monomer. When the amount of the catalyst is 50 ppm or more with respect to the monomer, the catalyst is not deactivated, and the ring-opening polymerization of lactide can quantitatively proceed. Also, when the amount of the catalyst is 5,000 ppm or less with respect to the monomer, it is possible to prevent coloring of the polylactic acid resin and reduction in the molecular weight of the polylactic acid resin that would otherwise occur due to side reactions resulting from excessive reaction.

Also, for preventing the polymerization in the polymerization step from ununiformly starting, preferably, the monomer and the initiator are previously mixed well before the monomer contacts the catalyst.

The raw material mixing step can be performed in the charged materials-melting vessel.

No particular limitation is imposed on the reaction conditions of the charged materials-melting vessel, which may be appropriately selected in accordance with the intended purpose, as long as the temperature in the reaction conditions is higher than the melting point of the monomer of the raw materials (e.g., the melting point of lactide is 100°C). The reaction conditions are preferably the internal temperature of from 105°C to 190°C, being under an inert atmosphere, and being slightly pressurized, and more preferably the internal temperature of from 110°C to 180°C, being under an inert atmosphere, and the internal pressure of from 12 kPa to 550 kPa. From the viewpoints of preventing inclusion of external gas, moisture, etc. in the reaction system, the internal pressure is further preferably from 101.3 kPa to 304 kPa. The internal pressure of from 111.5 kPa to 202.7 kPa is particularly preferable because of easy handling and of sufficiently high defense effects against moisture and an external gas.

In the case of employing the batch process, if desired, a product obtained in each of the polymerization vessels can be solidified and taken out. Alternatively, in one preferable embodiment, while from the beginning of reaction, monitoring the moment of a stirring force or the melt viscosity mechanically or electrically based on, for example, the power of a motor for stirring in an anchor-type stirring blade-equipped stirring vessel, the temperature is set to be, for example, 190°C or lower at the beginning of reaction (i.e., the raw material mixing step) and then the reaction temperature is increased as the reaction proceeds, and is eventually increased to be from 190°C to 240°C (i.e., the below-described polymerization step).

A precursor of the polylactic acid resin composition obtained in the charged materials-melting vessel (which may be referred to as a "prepolymer") is preferably transferred to a polymerization vessel in the next polymerization step while being maintained in a molten state without being solidified for increasing production efficiency. However, if necessary, the precursor can be transferred after being solidified into a predetermined shape, such as a chip. Especially, the precursor during the polymerization process can be formed into a chip and appropriately stored, and then can be transferred to the next polymerization vessel. Here, it is necessary to prevent degradation of the prepolymer due to, for example, moisture absorption, light, and oxygen, which always applies to the melt polymerization method.

For keeping the polymerization activity in the next step at a sufficiently high level, the water content of the prepolymer is preferably 20 ppm or less, more preferably 10 ppm or less, and further preferably 5 ppm or less.

<<Polymerization step>>

The polymerization step is a step of polymerizing lactic acid, lactide, or both, which are the raw materials of the polylactic acid resin composition, and other optional monomers.

No particular limitation is imposed on the method of polymerizing the monomer of the raw materials of the polylactic acid resin, which may be appropriately selected from publicly known production methods of high-molecular-weight polylactic acid resins. Examples thereof include direct melt polymerization methods of lactic acid, solid-phase polymerization methods, and melt ring-opening polymerization methods of lactide, a dimer of lactic acid (lactide method). Of these, as the method of polymerizing the monomer of the polylactic acid resin, the melt ring-opening polymerization method of lactide, which is a production process generating no condensed water, is suitably employed from the viewpoint of producing a polymer having a weight average molecular weight (Mw) of 300,000 or higher because the melt ring-opening polymerization method of lactide readily produces such a polymer.

The acid value of the polylactic acid resin in the polylactic acid resin composition is a value associated with the residual monomer (lactic acid). As described above, lactic acid has both of: a hydroxyl group that reduces the molecular weight through hydrolysis; and a carboxyl group that deactivates the catalyst. Therefore, the presence of lactic acid is not preferable in the reaction process of the ring-opening addition polymerization of lactide. Thus, the acid value of the polylactic acid resin is preferably 0.5 mgKOH/g or lower and more preferably 0.1 mgKOH/g or lower.

The acid value of the polylactic acid resin can be measured according to, for example, JIS K 0070-1992.

The polylactic acid resin composition can be produced through polymerization in a compressible fluid. The method of producing the polylactic acid resin composition through polymerization in the compressible fluid can avoid heating at a high temperature and does not readily produce poor products, which is preferable.

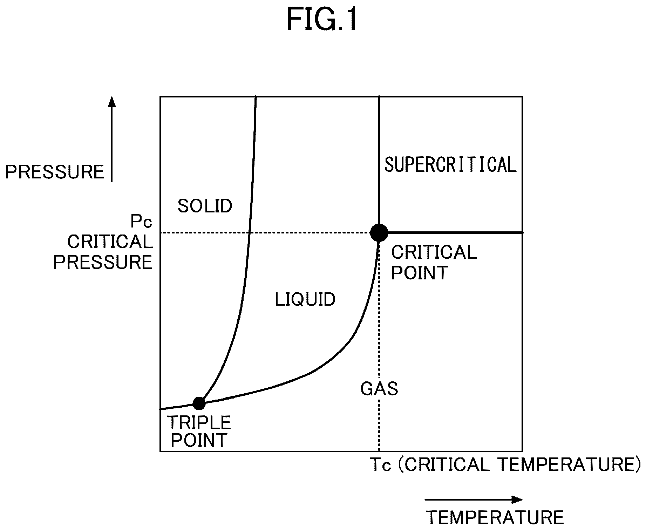

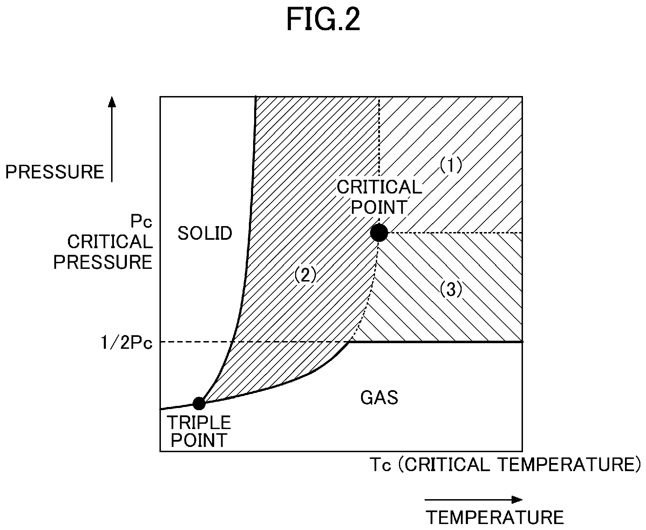

Next, the compressible fluid is illustrated with reference to FIG. 1 and FIG. 2.

FIG. 1 is a phase diagram illustrating states of a substance with respect to the temperature and pressure of the compressible fluid that is suitably used for production of the polylactic acid resin composition. FIG. 2 is a phase diagram for defining a range of the compressible fluid that is suitably used for production of the polylactic acid resin composition.

The "compressible fluid" refers to a state of a substance present in the region (1), (2), or (3) of FIG. 2 in the phase diagram of FIG. 1. In such regions, the substance is known to have an extremely high density and exhibit different behaviors from those at normal temperature and normal pressure. Note that, the substance present in the region (1) is a supercritical fluid.

The "supercritical fluid" is a fluid that exists as a non-condensable high-density fluid in a region having a temperature (critical temperature) and a pressure (critical pressure) that exceed the limiting point (critical point) at which a gas and a liquid can coexist, or a fluid that is not condensed even by being compressed. In the region (2), the substance turns into a liquid, but in the present embodiment, the substance is a liquefied gas obtained by compressing a substance existing as a gas at normal temperature (25°C) and normal pressure (1 atm). In the region (3), the substance is in the state of a gas, but in the present embodiment, the substance is a high-pressure gas whose pressure is 1/2 or higher than the critical pressure (Pc), i.e. 1/2Pc or higher. The compressible fluid is preferably a supercritical fluid having the critical pressure or higher and the critical temperature or higher.

EP 4 335 887 B1

No particular limitation is imposed on the substance forming the compressible fluid, which may be appropriately selected in accordance with the intended purpose. Examples thereof include carbon monoxide, carbon dioxide, dinitrogen monoxide, nitrogen, methane, ethane, propane, 2,3-dimethylbutane, ethylene, and dimethyl ether. These compressible fluids may be used alone or in combination. Of these, carbon dioxide is preferable, for example, because the critical pressure thereof is about 7.4 MPa and the critical temperature thereof is about 31°C, thereby readily forming a supercritical state, and because carbon dioxide is easy to handle.

No particular limitation is imposed on the amount of the compressible fluid fed to the raw materials of the polylactic acid resin composition in the molten state, which may be appropriately adjusted in accordance with, for example, the combination of the kind of the polylactic acid resin with the compressible fluid, the temperature, and the pressure, which change solubility of the polylactic acid in the compressible fluid. For example, in the case of the combination of polylactic acid and carbon dioxide, the amount of carbon dioxide fed is preferably 2 parts by mass or more and 20 parts by mass or less, more preferably 5 parts by mass or more and 10 parts by mass or less, and further preferably 7 parts by mass or more and 10 parts by mass or less, with respect to 100 parts by mass of the raw materials of the polylactic acid resin composition. When the amount of carbon dioxide fed is 2 parts by mass or more with respect to 100 parts by mass of the polylactic acid resin composition, it is possible to plasticize the polylactic acid resin composition and suppress the above-described side reactions. Also, when the amount of carbon dioxide fed is 20 parts by mass or less with respect to 100 parts by mass of the polylactic acid resin composition, it is possible to perform uniform reaction without separation between carbon dioxide and the polylactic acid resin composition.

The pressure upon the polymerization; **i.e.,** the pressure of the compressible fluid may be such a pressure that the compressible fluid becomes a liquefied gas (in the region (2) in the phase diagram of FIG. 2) or a high-pressure gas (in the region (3) in the phase diagram of FIG. 2). However, the pressure upon the polymerization is preferably such a pressure that the compressible fluid becomes a supercritical fluid (in the region (1) in the phase diagram of FIG. 2). When the compressible fluid is in the state of a supercritical fluid, the ring-opening polymerizable monomer of lactide becomes increasingly dissolved or plasticized, and the polymerization reaction can proceed uniformly and quantitatively.

Note that, when carbon dioxide is used as the compressible fluid, the pressure thereof is preferably 3.7 MPa or higher, more preferably 5 MPa or higher, and further preferably equal to or higher than the critical pressure of 7.4 MPa, in consideration of, for example, an increase in reaction efficiency and a polymer conversion rate. Also, when carbon dioxide is used as the compressible fluid, the temperature thereof is preferably 25°C or higher for the same reasons as described above.

In the present embodiment, no particular limitation is imposed on the concentration of the compressible fluid, which may be appropriately selected in accordance with the intended purpose, as long as the concentration of the compressible fluid is such a concentration as to dissolve or plasticize the ring-opening polymerizable monomer and the polymer produced from the ring-opening polymerizable monomer, in the compressible fluid.

The method of producing the polylactic acid resin composition through polymerization in the compressible fluid can be performed using a continuous polymerization apparatus.

<<Polymerization terminating step>>

The polymerization terminating step is a step of terminating the polymerization reaction.

No particular limitation is imposed on the method of terminating the polymerization reaction, which may be appropriately selected in accordance with the intended purpose. Examples thereof include: a method of adding an end-capping agent (polymerization terminator) to the product obtained in the polymerization step; and a method of adding a deactivator that deactivates the catalyst. The polymerization terminating step is preferably performed before the below-described monomer removing step. Note that, in the method of adding the end-capping agent, it is preferable to add the end-capping agent in a phase before the viscosity rapidly increases. Specifically, it is preferable to add the end-capping agent in an environment to which the compressible fluid has been added.

No particular limitation is imposed on the end-capping agent, which may be appropriately selected in accordance with the intended purpose, as long as the end-capping agent reacts with the hydroxyl group of the polylactic acid resin. Examples thereof include phosphorus-based compounds (phosphorus-including compounds), carboxylic acid compounds, hydrochloric acid, and anhydrides thereof. These may be used alone or in combination.

Examples of the phosphorus-based compounds include phosphoric acid, triethyl phosphonoacetate, and metaphosphoric acid.

Examples of the carboxylic acid compounds include benzoic acid, acetic acid, lactic acid, and citric acid.

Of these, a monocarboxylic acid compound, monocarboxylic anhydride, or both are preferable, and acetic anhydride, acetic acid, and citric acid are more preferable because these can efficiently react with the end hydroxyl group of the polylactic acid resin.

Note that, the acid components as these end-capping agents also function as a deactivator by coordinating to the catalyst to thereby produce the effect of reducing the catalytic activity.

No particular limitation is imposed on the amount of the end-capping agent used, which may be appropriately selected in accordance with, for example, the purpose of addition, and the kind of the additive in the polylactic acid resin composition. However, the amount of the end-capping agent is preferably 0.5 parts by mass or less with respect to 100 parts by mass of the polylactic acid resin composition. By adjusting the amount of the end-capping agent to be 0.5 parts by mass or less with respect to 100 parts by mass of the polylactic acid resin composition, it is possible to take advantage of the features of the polylactic acid resin; i.e., a resin that can be turned into a compost. Also, by performing end-capping of the polylactic acid resin composition, it is possible to suppress reduction in the molecular weight in the below-described monomer removing step.

It is essential that the end-capping agent reacts with the hydroxyl group included in the polylactic acid resin, and the end-capping agent is preferably an acid component such as carboxylic acid. Therefore, when the catalyst is included in the raw materials of the polylactic acid resin composition, the polymerization terminating step also functions as a catalyst deactivating step for deactivating the catalyst.

When the polylactic acid resin composition includes the catalyst, the catalyst also functions as a catalyst for depolymerization (degradation) reaction, and thus a remaining of catalytic activity after the polymerization reaction is not preferable. Since the catalyst itself cannot be readily removed, it is preferable to deactivate the catalyst. By deactivating the catalyst, durability to the temperature and humidity is imparted to the polylactic acid resin composition, and it is possible to suppress reduction in the viscosity upon melting of the polylactic acid resin composition. This is likely because the end-capping agent, preferably the monocarboxylic acid compound, the monocarboxylic anhydride, or both, coordinate to a metal atom, preferably a tin atom, derived from the metal catalyst included in the polylactic acid resin in the polylactic acid resin composition, and thereby inhibits coordination of a water molecule to the metal atom not to cause hydrolysis of the polylactic acid resin. Therefore, by using the end-capping agent in production of the polylactic acid resin composition, when the polylactic acid resin composition is re-melted and processed into a molded body, it is possible to suppress hydrolysis due to a trace amount of moisture included in the polylactic acid resin composition.

<<Monomer removing step>>

The monomer removing step is a step of removing the unreacted monomer after the polymerization step, preferably after the polymerization terminating step. The monomer removing step is advantageous in suppression of reduction in the molecular weight of the polylactic acid resin, and in suppression of side reactions.

No particular limitation is imposed on the method of removing the unreacted monomer, which may be appropriately selected in accordance with the intended purpose. Examples thereof include a method of reducing the pressure of the polylactic acid resin composition with a vacuum pump or the like, and removing the unreacted monomer through a filter.

Since the unreacted monomer has such a property as to dissolve in the compressible fluid, the unreacted monomer can be efficiently removed. Therefore, in the monomer removing step, it is possible to remove the compressible fluid together with the unreacted monomer.

<<Additive addition step>>

The additive addition step is a step of adding the additive to the product obtained in the polymerization step.

Lactic acid has two reactive groups; i.e., a hydroxyl group and a carboxyl group. The hydroxyl group of lactic acid serves in the same manner as in the initiator alcohol, and reduces the molecular weight of the polylactic acid resin. The carboxyl group of lactic acid degrades the activity of the catalyst, and inhibits the polymerization reaction. Thus, it is preferable to remove these groups.

The method of removing the hydroxyl group, the carboxyl group, or both of lactic acid is, for example, a method of adding the hydrolysis inhibitor to the polylactic acid resin composition. In addition, if the intended compound is a low-molecular-weight compound, a method of performing pressure reduction is exemplified.

No particular limitation is imposed on the amount of the hydrolysis inhibitor used, which may be appropriately selected in accordance with the intended purpose. It is generally recommended that the hydrolysis inhibitor be used at 1% by mass or more. As described above, however, the polylactic acid resin in the polylactic acid resin composition preferably has a smaller number of reactive groups at the ends of the polylactic acid resin. From this viewpoint, the amount of the hydrolysis inhibitor is preferably less than 1% by mass with respect to the product.

Also, by addition of the antioxidant in the additive addition step, it is possible to suppress radical degradation upon melting of the obtained polylactic acid resin composition.

Also, by addition of the polymerization terminator in the additive addition step, it is possible to suppress degradation of the obtained polylactic acid resin composition after the polymerization.

Next, one example of the continuous polymerization apparatus used for the production method of the polylactic acid resin composition will be specifically described with reference to the drawings. The production method and the production apparatus for the polylactic acid resin composition of the present invention are not limited thereto.

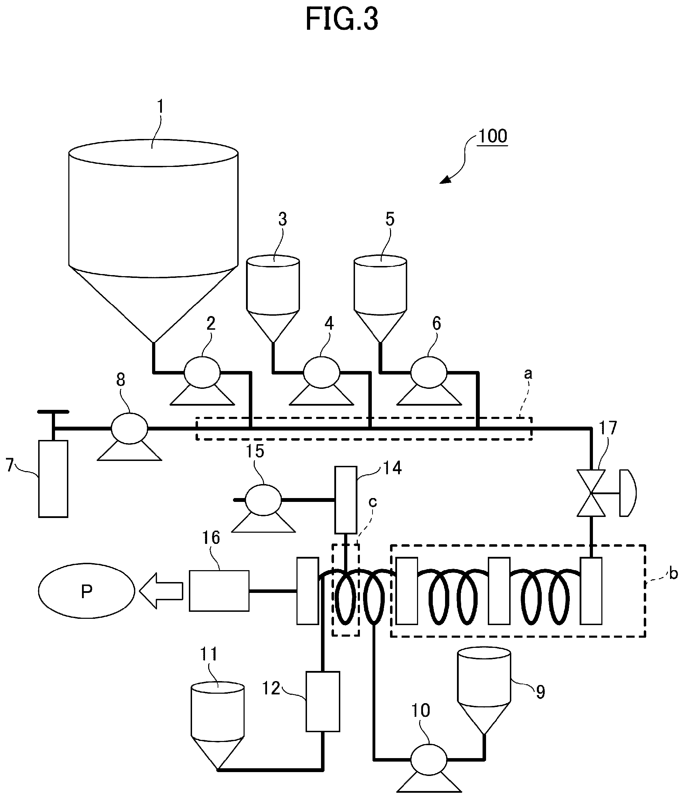

FIG. 3 is a view illustrating one example of the continuous polymerization apparatus that is suitably used for production of the polylactic acid resin composition of the present invention.

As illustrated in FIG. 3, a continuous polymerization apparatus 100 uses a twin-screw extruder (e.g., JSW The JAPAN STEEL WORKS, LTD.) and includes a raw material mixing area a, a polymerization area b, and a monomer removing area c. Liquid materials are fed with metering pumps. The raw materials that are solid at normal temperature are separately heated and melted in tanks, and can be fed with metering pumps.

-Raw material mixing area a-

In the raw material mixing area a, the monomer, the initiator, and the compressible fluid are mixed and heated. As the raw materials, the monomer of the polylactic acid resin is fed from a tank 1 through a metering pump 2, the initiator is fed from a tank 3 through a metering pump 4, the catalyst is fed from a tank 5 through a metering pump 6, and the compressible fluid is fed from a tank 7 through a metering pump 8. From the upstream portion of the continuous polymerization apparatus 100 (extruder), the compressible fluid, the monomer, the initiator, and the catalyst are charged in order. No particular limitation is imposed on the retention time of these raw materials in the raw material mixing area a. However, the retention time thereof is preferably from 1 minute to 10 minutes. When the retention time of the raw materials is 1 minute or longer, the raw materials can be uniformly mixed, and it is possible to prevent the molecular weight distribution of the obtained polymer from becoming broader. When the retention time of the raw materials is 10 minutes or shorter, it is possible to prevent coloring of the polylactic acid resin composition. Since it is desired that the materials be rapidly made uniform, it is desired that the stirring in the raw material mixing area a be performed in a turbulent field. For separation from the retention time for the polymerization reaction in the polymerization area b, the raw material mixing area a may be a loop reactor.

The monomer to be used may be subjected to a pre-treatment for removing, for example, included moisture and low-molecular-weight organic acid, such as lactic acid that is a degraded product of lactide; i.e., the monomer of the polylactic acid resin.

No particular limitation is imposed on the method of the pre-treatment of the monomer, which may be appropriately selected in accordance with the intended purpose. Examples thereof include: removing methods through processes such as drying under reduced pressure and recrystallization; and methods using adsorbents such as activated carbon, zeolite, and ion-exchange resins.

When the monomer is solid at normal temperature, the monomer may be melted at a predetermined temperature before being fed.

No particular limitation is imposed on the method of mixing the initiator and the compressible fluid, and the initiator and the compressible fluid may be mixed in the continuous polymerization apparatus 100 (extruder) or in a tank in which lactide has been dissolved.

When the additives such as the heat stabilizer and the light-resistant agent are added, unless the polymerization reaction is inhibited, those additives may be mixed in the raw material mixing area a, or may be added in either or both of the polymerization area b and the monomer removing area c.

Note that, although literally, the raw material mixing area a is mentioned, the polymerization reaction starts upon charging of the catalyst. However, the reaction rate attained is approximately 50% or less (the residual monomer is 50% or more) and preferably 20% or less (the residual monomer is 80% or more).

The raw material mixture obtained in the raw material mixing area a is fed to the polymerization area b by a pressure regulation valve 17.

-Polymerization area b-

In the polymerization area b, the polymerization reaction of the polylactic acid resin is completed by maintaining the high-temperature state. The raw material mixing area a is for a process specialized in mixing the raw materials and making the raw materials uniform. In the polymerization area b, it is necessary to uniformly stir the fluid having an increased viscosity and rapidly remove heat of reaction.

No particular limitation is imposed on the reaction time in the polymerization area b, which may be adjusted in accordance with the molecular weight of the polylactic acid resin to be obtained. However, the reaction time is preferably from 30 minutes to 90 minutes. When the reaction time is 30 minutes or longer, the conversion rate can be increased. From the viewpoints of preventing coloring in the below-described monomer removing area c and of productivity, the reaction time in the polymerization area b is preferably 120 minutes or shorter. For achieving a predetermined extent of vacuum in the below-described monomer removing area c, the conversion rate at the outlet of the polymerization area b is preferably 90% or higher.

As used herein, "conversion rate" refers to a percentage (%) that is obtained by subtracting the amount of the below-described unreacted monomer (% by mass) from the polylactic acid resin composition (100% by mass).

No particular limitation is imposed on the reaction temperature in the polymerization area b, which may be approximately selected in accordance with the intended purpose. However, the reaction temperature is preferably from 180°C to 230°C. When the reaction temperature is 230°C or lower, it is possible to suppress side reactions such as transesterification and cleavage of the molecular chains, and successfully increase the molecular weight of the polylactic acid resin. When the reaction temperature is 180°C or higher, it is possible to suppress side reactions in the polymerization reaction of the monomer, and successfully increase the molecular weight of the polylactic acid resin.

Also, for avoiding coloring and reduction of the molecular weight of the obtained polylactic acid resin, the lateral surface and the cylinder temperature of the continuous polymerization apparatus 100 (extruder) in the process of being increased to a desired reaction temperature are desirably controlled to be within +20°C with respect to the temperature of the polylactic acid resin.

-Monomer removing area c-

Since the ring-opening addition polymerization of lactide is an equilibrium reaction, a certain amount of the unreacted monomer (lactide) exists. For removing this, a process to remove the compressible fluid and the monomer is necessary. In the continuous polymerization apparatus 100, the monomer removing area c includes a residual monomer removing trap 14 and a vacuum pump 15.

Also, the feature that lactide serving as the monomer dissolves in the compressible fluid is advantageous in suppressing reduction in the molecular weight of the obtained polylactic acid resin and occurrences of side reactions, and the residual monomer can be efficiently removed.

No particular limitation is imposed on the temperature of the monomer removing area c, which may be appropriately selected in accordance with the intended purpose. However, the temperature thereof is preferably from 180°C to 220°C and more preferably from 190°C to 210°C. When the temperature of the monomer removing area c is from 180°C to 220°C, the equilibrium of polymerization is relatively shifted to production of the polymer (polylactic acid resin) and the unreacted monomer can be removed without cleavage of the molecular chains.

-Other areas-

The continuous polymerization apparatus 100 may include: an area where the polylactic acid resin, which has been obtained through polymerization of the raw material monomers in the polymerization area b, is reacted with the end-capping agent, which has been fed from a tank 9 through a metering pump 10; and if necessary, an area where the hydrolysis inhibitor is fed from a tank 11 through a metering feeder 12. Note that, the polylactic acid resin after the monomer removal decreases in molecular weight due to cleavage of the molecular chains in the continuous polymerization apparatus 100. Thus, for obtaining the polylactic acid resin as a polymer having a high molecular weight, the total retention time in an end-capping agent-feeding area and a hydrolysis inhibitor-feeding area is preferably 30 minutes or shorter and more preferably 10 minutes or shorter.

The reaction product obtained through the above-described steps in the continuous polymerization apparatus 100 is the polylactic acid resin composition. No particular limitation is imposed on the shape of the thus-obtained polylactic acid resin composition, which may be appropriately selected in accordance with the intended purpose. Examples thereof include pellets and sheets.

The production method of the polylactic acid resin composition can suppress side reactions due to increase in viscosity and suitably produce a polylactic acid resin composition including a high-molecular-weight polylactic acid resin having biodegradability, being excellent in melt stability and moldability, and being free of yellowing.

No particular limitation is imposed on the applications of the polylactic acid resin composition, which may be appropriately selected in accordance with the intended purpose. For example, the polylactic acid resin composition is formed into, for example, a particle, a film, a sheet, a foamed sheet, a foamed bead, an injection-molded product, a fiber, and a container, and can be widely used for applications such as daily necessities applications, industrial materials, agricultural supplies, sanitary materials, pharmaceuticals, cosmetics, electrophotographic toners, packaging materials, electrical device materials, casings of home-use appliances, and automobile materials.

(Molded body and production method of molded body)

The molded body is obtained by molding the polylactic acid resin composition of the present invention.

No particular limitation is imposed on the molded body, which may be appropriately selected in accordance with the intended purpose. Examples thereof include films, sheets, foamed sheets, foamed beads, fibers, and containers.

The polylactic acid resin composition having a high melt viscosity according to the present invention is suitable for, for example, a container obtained through blow molding requiring the high melt viscosity, and a film, a sheet, and a foamed sheet that are obtained by appropriately blending low-molecular-weight polylactic acid and utilizing strain hardening property.

The production method of the molded body includes a step of molding the polylactic acid resin composition of the present invention, and further includes other optional steps.

No particular limitation is imposed on the molding method, which may be appropriately selected from publicly known methods in accordance with the intended shape of the molded body. For example, for production of the molded body in the form of a sheet, it is possible to use a publicly known sheet production method (e.g., sheet processing) used for a thermoplastic resin.

Such molded bodies as a sheet and a cast film involve a neck-in phenomenon in which the sheet width or the film width becomes narrower than the width of a die outlet. The extent of the neck-in phenomenon is also closely related to the melt viscosity and the melt tension. The polylactic acid resin composition of the present invention is excellent in the melt stability, and moreover neither varies in the molecular weight so much nor forms gelled matter. Therefore, the obtained molded body is also excellent in reproducibility and uniformity. Thus, the polylactic acid resin composition of the present invention is excellent in stretching property and is excellent because the polylactic acid resin composition does not readily involve the neck-in phenomenon. Therefore, the production method of the polylactic acid resin composition of the present invention, which can produce the above-described polylactic acid resin composition of the present invention, is a production method that is advantageous in practical use.

The polylactic acid resin composition of the present invention is a suitable material for melt spinning and dry spinning. The polylactic acid resin composition of the present invention can be set in accordance with the intended purpose in terms of yarn making conditions, spinning conditions, knitting conditions, post-treatment conditions, staining conditions, and processing conditions. The polylactic acid resin composition having a high melt viscosity of the present invention does not have any troubles such as yarn breakage. The polylactic acid resin composition of the present invention can be processed into a yarn or a textile having desired physical properties and features, such as thickness, cross-sectional shapes, fineness (e.g., tex, denier, and count), twisting, tensile strength and elongation, binding strength, heat resistance, extent of crimp, water absorptivity, oil absorptivity, bulkiness, stiffness, and texture.

Specific examples of the production method of the molded body include the T die method, the inflation method, the calendaring method, the foam molding method, the blow molding method, and the spinning method.

One of the conventional blow molding methods is, for example, a method of increasing the molecular weight by extending the polylactic acid with polyfunctional isocyanate for overcoming failures such as drawdown (see, for example, Japanese Unexamined Patent Publication No. 2014-88579). In this conventional method, however, the residual monomer, lactide, and the like of the polylactic acid resin inhibit the extension and cause variation, leading to an issue of difficulty in control. Meanwhile, according to the production method of the molded body, since the polylactic acid resin composition of the present invention, which is excellent in the melt stability and can be suppressed from gelation, is used, the production method is suitable for the blow molding method and for production of, for example, fibers and films in which formation of gelled components is not preferable.

The processing conditions for processing the polylactic acid resin composition into a sheet may be appropriately determined in accordance with the kind of the polylactic acid resin in the polylactic acid resin composition, an apparatus for use, etc. For example, when the polylactic acid resin composition is processed by the T die method, the polylactic acid resin composition can be molded into a sheet by extruding the polylactic acid resin composition, which is preferably heated to be 160°C or higher and 250°C or lower, from the T die attached to the outlet of an extruder.

Note that, the production apparatus for the polylactic acid resin composition is further provided with a molding area, and the production of the polylactic acid resin composition and the production of the molded body may be collectively performed.

A container and a foamed sheet will be specifically described below as exemplary aspects of the molded body. However, the present invention is not limited thereto.

<Container and production method of container> The container is obtained from the polylactic acid resin composition and other optional components.

<<Production method of container>>

No particular limitation is imposed on the production method of the container, which may be appropriately selected in accordance with the intended purpose. However, the blow molding method is suitably used. As long as the polylactic acid resin composition of the present invention is used, no particular limitation is imposed on the blow molding method, which may be a publicly known method.

In the blow molding, die swell is an indicator for shaping ability. The extent of die swell is presented as a ratio between the maximum diameter of the extruded polylactic acid resin composition and the nozzle diameter. No particular limitation is imposed on the die swell ratio in the blow molding using the polylactic acid resin composition of the present invention, which may be appropriately selected in accordance with the intended purpose. However, the die swell ratio is preferably from 1.2 to 3.5, more preferably from 1.3 to 2.5, and further preferably from 1.4 to 2.0. When the die swell ratio is 1.2 or higher, the polylactic acid resin composition can maintain a favorable cell form at a high expansion ratio; i.e.,

improves in foam blow moldability. Meanwhile, when the die swell ratio is 3.5 or lower, the production is industrially facilitated, and has high practical usability.

<Foamed sheet and production method of foamed sheet>

The foamed sheet is a polylactic acid-foamed body obtained from the polylactic acid resin composition and other optional components.

The polylactic acid resin composition of the present invention has a high molecular weight and does not readily degrade upon melting. Thus, the polylactic acid resin composition can increase an expansion ratio without impairing the strength of a sheet, and therefore can be suitably used for the foamed sheet.

<<Physical properties of the foamed sheet>>

As the physical properties of the foamed sheet, a bulk density, an expansion ratio, an average foam diameter, and a sheet thickness will be described.

-Bulk density-

No particular limitation is imposed on the bulk density of the foamed sheet, which may be appropriately selected in accordance with the intended purpose. However, the bulk density is preferably $0.01$ g/cm$^3$ and higher and $0.250$ g/cm$^3$ or lower, more preferably $0.025$ g/cm$^3$ and higher and $0.125$ g/cm$^3$ or lower, and further preferably $0.030$ g/cm$^3$ and higher and $0.083$ g/cm$^3$ or lower. By adjusting the bulk density of the foamed sheet using the polylactic acid resin composition of the present invention to be $0.01$ g/cm$^3$ and higher and $0.250$ g/cm$^3$ or lower, the foamed sheet can have a sheet strength and a cushioning performance in a well-balanced manner.

The bulk density of the foamed sheet can be adjusted by changing the expansion ratio by, for example, the foaming temperature upon production of the foamed sheet, the amount of the foaming agent, and the type of the die. Specifically, the expansion ratio increases by, for example, lowering the foaming temperature upon production of the foamed sheet or by increasing the amount of the foaming agent. Thus, it is possible to reduce the bulk density of the foamed sheet.

In the present invention, the bulk density of the foamed sheet is a value that is measured in the following manner.

Specifically, the foamed sheet is left to stand still for 24 hours or longer in an environment adjusted to 23°C in temperature and 50% in relative humidity, and is cut out into a test piece of 50 mm×50 mm. The cut-out test piece is determined for the bulk density by the hydrostatic weighing method using an automatic densimeter (e.g., DSG-1, available from Toyo Seiki Seisaku-sho, Ltd.). In the hydrostatic weighing method, the weight (g) of the foamed sheet in open air is accurately weighed and the weight (g) of the foamed sheet in water is accurately weighed, and the bulk density is calculated from the following formula (3).

Bulk density [g/cm$^3$] = Sample weight in open air [g] / { (Sample weight in open air [g] - Sample weight in water [g]) × Density of liquid [g/cm$^3$]} ... Formula (3)　　　Formula (3)

-Expansion ratio-

No particular limitation is imposed on the expansion ratio of the foamed sheet, which may be appropriately selected in accordance with the intended purpose. However, the expansion ratio of the foamed sheet is preferably from 5 fold to 100 fold, more preferably from 10 fold to 40 fold, and further preferably from 15 fold to 35 fold. When the expansion ratio of the foamed sheet is from 5 fold to 100 fold, the foamed sheet can maintain a cushioning performance and a strength.

Note that, the expansion ratio of the foamed sheet can be determined according to the following formula (4); i.e., by dividing the density (true density $\rho 0$) of the polylactic acid resin composition forming the foamed sheet by the bulk density ($p1$). Note that, the true density here is the density of the polylactic acid resin of the raw materials, and may be a value in literature or may be a value obtained by measuring a pellet of the raw materials. The true density is about 1.25 g/c$_m^3$.

```
Expansion ratio = True density (ρ0)/Bulk density (ρ1) ...

Formula (4)
```

-Average foam diameter-

No particular limitation is imposed on the foam diameter of the foamed sheet, which may be appropriately selected in accordance with the intended purpose. The average foam diameter of the foamed sheet is preferably from 10 $\mu$m to 200 $\mu$m, more preferably from 20 $\mu$m to 100 $\mu$m, and further preferably from 30 $\mu$m to 80 $\mu$m.

The average foam diameter can be appropriately adjusted in accordance with, for example, the amount of the filler, the dispersed state of the foams, and the melt tension of the foamed sheet, although there is no limitation to the above. For example, when the bulk density is from 0.025 g/cm$^3$ to 0.010 g/cm$^3$, the average foam diameter is preferably 200 $\mu$m or less.

The average foam diameter of the foamed sheet is measured by cutting the foamed sheet to expose a cross section thereof using, for example, an ion milling device and photographing the cross section using a scanning electron microscope (SEM), thereby obtaining a SEM image. Using software of Image-Pro Premier (available from mediacy Co.) for the obtained SEM image of the cross section (e.g., at a magnification of x3,000), the gray components representing the foams (pores) and white components representing the resin components are binarized. Then, in a predetermined area (e.g., an area of 35 $\mu$m $\times$ 20 $\mu$m), the average particle diameter (Feret diameter) of the gray components representing the foams is determined. The average foam diameter can be calculated by calculating the average value of only the gray components (foams) having Feret diameters of 0.5 $\mu$m or more.

-Sheet thickness-

No particular limitation is imposed on the sheet thickness of the foamed sheet, which may be appropriately selected in accordance with the intended purpose. However, the sheet thickness of the foamed sheet is preferably from 1.0 mm to 10.0 mm, more preferably from 1.5 mm to 7.0 mm, and further preferably from 2.0 mm to 5.0 mm. When the sheet thickness is from 1.0 mm to 10.0 mm, the foam can be made minute and uniform, and thus the foamed sheet can be readily molded and exhibit a sufficient cushioning performance.

The sheet thickness may be an average thickness. The average thickness may be an average value obtained by measuring the thickness of the foamed sheet in the cross section of the foamed sheet at a plurality of positions thereof, and averaging the measured values of the thickness.

<<Production method of foamed sheet>>

No particular limitation is imposed on the production method of the foamed sheet, which may be appropriately selected in accordance with the intended purpose. Examples thereof include the extrusion kneading molding method and the injection molding method. Of these, the extrusion kneading molding method is suitably used as the production method of the foamed sheet.

The production method of the foamed sheet preferably includes a melting step, a compressible fluid feeding step, a kneading step, a foaming step, and a molding step, and further includes other optional steps.

-Melting step-

The melting step is a step of melting the polylactic acid resin composition.

The melting step heats and melts the polylactic acid resin composition.

Note that, the melting step in the production method of the foamed sheet can be performed in the same manner as in the raw material mixing step in the production method of the polylactic acid resin composition. Therefore, the melting step may be a step of mixing and melting the raw materials of the polylactic acid resin composition.

No particular limitation is imposed on the heating temperature in the melting step, which may be appropriately selected in accordance with the intended purpose, as long as the polylactic acid resin composition can be melted. However, the heating temperature is preferably equal to or higher than the melting temperature of the polylactic acid resin. By adjusting the heating temperature in the melting step to be equal to or higher than the melting temperature of the polylactic acid resin, it is possible to melt the polylactic acid resin composition. Thereby, in the next compressible fluid feeding step, the polylactic acid resin composition can be in a state of being able to be uniformly mixed with the compressible fluid.

In the melting step, in addition to the polylactic acid resin composition, preferably, other components such as a foam nucleating material, a chain extender, a foaming agent, and an additive are added, and these are melted and mixed.

--Foam nucleating material--

The foam nucleating material (hereinafter may be referred to as a "filler") is preferably included for adjusting, for example, the cell diameter and number density of the foamed sheet.

No particular limitation is imposed on the foam nucleating material, which may be appropriately selected in accordance with the intended purpose. Examples thereof include inorganic nucleating materials and organic nucleating materials. These may be used alone or in combination.

Examples of the inorganic nucleating materials include talc, kaolin, calcium carbonate, layered silicate, zinc carbonate, wollastonite, silica, alumina, magnesium oxide, titanium oxide, calcium silicate, sodium aluminate, calcium aluminate, sodium aluminosilicate, magnesium silicate, glass balloon, carbon black, zinc oxide, antimony trioxide, zeolite, hydrotalcite, metal fibers, metal whiskers, ceramic whiskers, potassium titanate, boron nitride, graphite, glass fibers, and carbon fibers. These may be used alone or in combination. Of these, from the viewpoint of being able to efficiently disperse thereby reducing the necessary amount and an environmental load, the inorganic nucleating material is preferably silica, titanium oxide, or layered silicate.

Examples of the organic nucleating materials include: naturally occurring polymers, such as starch, cellulose nanofibers, cellulose particles, wood powder, soy pulp, chaff, and bran, and modified products thereof; and glycerin compounds, sorbitol compounds, benzoic acid, benzoic acid compounds, metal salts thereof, metal salts of phosphoric acid ester, and rosin compounds. These may be used alone or in combination.

No particular limitation is imposed on the number average particle diameter of the foam nucleating material, which may be appropriately selected in accordance with the intended purpose. However, from the viewpoint of being able to increase the surface area per the amount thereby reducing the necessary amount, the foam nucleating material preferably has a number average particle diameter of 100 nm or less in terms of the length thereof in the minor-axis direction.

No particular limitation is imposed on the amount of the foam nucleating material, which may be appropriately selected in accordance with the intended purpose. However, the amount of the foam nucleating material is preferably 3% by mass or less with respect to the total mass of the raw materials of the foamed sheet. When the amount of the foam nucleating material is 3% by mass or less, it is possible to prevent the foamed sheet from becoming hard and hence brittle. Also, since the amount of the foam nucleating material, having no biodegradability, is preferably less, the amount of the foam nucleating material is preferably 1% by mass or less with respect to the total mass of the raw materials of the foamed sheet.

Note that, the amount of the organic foam nucleating material can be determined through gas chromatography-mass spectrometry (GC-MS) with the following measurement device under the following measurement conditions.

[Measurement device and measurement conditions of GC-MS]

- GC-MS device (gas chromatography-mass spectrometry): GC-MS QP2010 (available from Shimadzu Corporation), with Py3030D as auxiliary equipment (available from Frontier Lab)
- Separation column: Ultra ALLOY UA5-30M-0.25F (available from Frontier Lab)
- Heating temperature of sample: 300°C

  - Column oven temperature: increased from 50°C (retained for 1 minute) at 15°C/min to 320°C (retained for 6 minutes)
  - Ionization method: Electron Ionization (E.I) method
  - Detection mass range: 25 to 700 (m/z)

The amount of the inorganic foam nucleating material can be determined by, for example, a method according to JIS K 7250-1:2006 (Plastics-Determination of ash-Part 1: General methods).

--Chain extender--

No particular limitation is imposed on the chain extender, which may be appropriately selected in accordance with the intended purpose. However, the chain extender is preferably a compound having reactivity with a reactive group that is a hydroxyl group, a carboxylic acid group, or both of the polylactic acid resin. Examples thereof include epoxy-based chain extenders (chain extenders having an epoxy group) and isocyanate-based chain extenders (chain extenders having an isocyanate group). These may be used alone or in combination. Of these, preferably, the chain extender is, for example, an epoxy-functional (meth)acrylic-styrene-based chain extender having two or more epoxy groups in the molecule thereof, or polyisocyanate having two or more isocyanate groups in the molecule thereof. From the viewpoint of being able to introduce a branched structure to the polylactic acid, efficiently increase the melt strength thereof, and reduce the amount of the residual unreacted product, the chain extender is more preferably an epoxy-functional (meth)acrylic-styrene-based chain extender having three or more epoxy groups in the molecule thereof, or polyisocyanate having three or more isocyanate groups in the molecule thereof. Such a chain extender can suppress formation of combined cells and breakage of cells, and increase the expansion ratio.

As used herein, the epoxy-functional (meth)acrylic-styrene-based chain extender having two or more epoxy groups in the molecule thereof is a polymer obtained by co-polymerizing a (meth)acrylic monomer having an epoxy group with a styrene monomer.

Examples of the (meth)acrylic monomer having the epoxy group include monomers having a 1,2-epoxy group, such as glycidyl acrylate and glycidyl methacrylate. Examples of the styrene monomer include styrene and $\alpha$-methyl-styrene.

The epoxy-functional (meth)acrylic-styrene-based chain extender having two or more epoxy groups in the molecule thereof may include a (meth)acrylic monomer having no epoxy group in a copolymer component thereof. Examples of the (meth)acrylic monomer include methyl acrylate, ethyl acrylate, propyl acrylate, butyl acrylate, cyclohexyl acrylate, methyl methacrylate, ethyl methacrylate, propyl methacrylate, butyl methacrylate, and cyclohexyl methacrylate.

Examples of the polyisocyanate having two or more isocyanate groups in the molecule thereof include: aliphatic diisocyanates such as 1,6-hexamethylene diisocyanate, 3-isocyanatomethyl-3,5,5-trimethylcyclohexyl isocyanate (isophorone diisocyanate), 1,4-tetramethylene diisocyanate, 2,4,4-trimethylhexamethylene diisocyanate, 2,2,4-trimethylhexamethylene diisocyanate, dicyclohexylmethane-4,4'-diisocyanate, methylcyclohexyl-2,4-diisocyanate, methylcyclohexyl-2,6-diisocyanate, xylylene diisocyanate, 1,3-bis(isocyanate)methylcyclohexane, tetramethylxylylene diisocyanate, transcyclohexane-1,4-diisocyanate, and lysine diisocyanate; alicyclic polyisocyanates such as isophorone diisocyanate, hydrogenated diphenylmethane diisocyanate, hydrogenated tolylene diisocyanate, hydrogenated xylylene diisocyanate, hydrogenated tetramethylxylylene diisocyanate, and cyclohexane diisocyanate; aromatic diisocyanates such as 2,4-toluylene diisocyanate, 2,6-toluylene diisocyanate, diphenylmethane-4,4'-isocyanate, 1,5'-naphthene diisocyanate, tolidine diisocyanate, diphenylmethylmethane diisocyanate, tetraalkyldiphenylmethane diisocyanate, 4,4'-dibenzyl diisocyanate, and 1,3-phenylene diisocyanate; triisocyanates such as lysine ester triisocyanate, triphenylmethane triisocyanate, 1,6,11-undecane triisocyanate, 1,8-isocyanate-4,4-isocyanatomethyloctane, 1,3,6-hexamethylene triisocyanate, and bicycloheptane triisocyanate; triisocyanate compounds such as adducts of trimethylolpropane and 2,4-toluylene diisocyanate and adducts of trimethylolpropane and diisocyanates (e.g., 1,6-hexamethylene diisocyanate); and modified polyisocyanate compounds obtained by reacting polyvalent alcohol such as glycerin and pentaerythritol with, for example, the above aliphatic or aromatic diisocyanate compounds or the above triisocyanate compounds. These may be used alone or in combination.

No particular limitation is imposed on the amount of the chain extender, which may be appropriately selected in accordance with the molecular weight of the polylactic acid resin and the molecular weight distribution of the polylactic acid resin. When the amount of a low-molecular-weight polylactic acid resin increases, inclusion of a larger amount of the chain extender tends to be necessary for imparting melt strength suitable for foaming. However, when the amount of the chain extender increases, biodegradability of a foamed sheet obtained from the polylactic acid resin composition and crystallinity of the polylactic acid resin tend to be poor. Thus, the amount of the chain extender is preferably 2 parts by mass or less with respect to 100 parts by mass that is the total mass of the polylactic acid resin composition and the chain extender.

As other chain extenders, a compound having two or more oxazoline groups in the molecule thereof, a compound having two or more carbodiimide groups in the molecule thereof (polycarbodiimide-based chain extender), and the like can be used.


--Foaming agent--


No particular limitation is imposed on the foaming agent, which may be appropriately selected in accordance with the intended purpose. Examples thereof include physical foaming agents and chemical foaming agents. The production method of the molded body is preferably clean with a small amount of substances remaining in the foamed sheet in the below-described foaming process. Thus, physical foaming is preferable, and the foaming agent is preferably a physical foaming agent.

No particular limitation is imposed on the foaming agent used for the physical foaming, which may be appropriately selected in accordance with the intended purpose. Examples thereof include: hydrocarbons including lower alkanes such as propane, normal butane, isobutane, normal pentane, isopentane, and hexane; ethers such as dimethyl ether; hydrocarbon halides such as methyl chloride and ethyl chloride; carbon dioxide; and nitrogen. These may be used alone or in combination. Of these, carbon dioxide and nitrogen are preferably used from the viewpoints of being able to be readily handled, being odorless, and being low in the environmental load.

No particular limitation is imposed on the amount of the foaming agent, which may be appropriately selected in accordance with the intended purpose. However, the amount of the foaming agent is preferably 2% by mass or more and 7% by mass or less, more preferably 3% by mass or more and 7% by mass or less, and further preferably 4% by mass or more and 5% by mass or less, with respect to the total mass of the raw materials of the foamed sheet. When the amount of the foaming agent is 2% by mass or more, the cell diameter becomes smaller, and a molded body obtained by molding the foamed sheet is increased in heat insulation to have increased heat resistance. When the amount of the foaming agent is 7% by mass or less, generation of defects, which would otherwise occur by the release of an excessive amount of the foaming agent from the foamed sheet, is suppressed. As a result, the foamed sheet is increased in strength and is not readily cracked upon molding. Thus, the molded body is successfully obtained by molding the foamed sheet.

--Additive--

Examples of the additive include heat stabilizers, antioxidants, and plasticizers. These may be used alone or in combination.

No particular limitation is imposed on the amount of the additive, which may be appropriately selected in accordance with the intended purpose. However, the amount of the additive is preferably 2% by mass or less with respect to the total mass of the raw materials of the foamed sheet. When the amount of the additive is 2% by mass or less with respect to the total mass of the raw materials of the foamed sheet, the recycling property becomes better.

-Compressible fluid feeding step-

The compressible fluid feeding step is a step of feeding the compressible fluid to the molten polylactic acid resin composition obtained in the melting step and plasticizing the molten polylactic acid resin composition. The production method of the foamed sheet preferably includes the compressible fluid feeding step because the foam nucleating material can be uniformly dispersed in the polylactic acid resin composition. When the compressible fluid is the same as the foaming agent, kneading of the foam nucleating material in the kneading step and foaming of the foam nucleating material in the foaming step can be performed in a series of steps. This is preferable as a manner of production from the viewpoint of reduction in the environmental load.

Note that, the compressible fluid feeding step in the production method of the foamed sheet can be performed in the same manner as in the polymerization step in the production method of the polylactic acid resin composition. Therefore, the compressible fluid feeding step may be a step of feeding the compressible fluid to the raw materials of the polylactic acid resin composition.

The compressible fluid in the production method of the foamed sheet may be the same as that described for the production method of the polylactic acid resin composition.

-Kneading step-

The kneading step is a step of melt-kneading the polylactic acid resin composition to which the compressible fluid has been fed in the compressible fluid feeding step. For more efficiently performing foaming in the below-described foaming step, the kneading is preferably performed after the foaming agent has been further added to the polylactic acid resin composition.

-Foaming step-

The foaming step is a step of vaporizing and removing the compressible fluid that has dissolved in the polylactic acid resin composition obtained in the kneading step, and of generating cells in the polylactic acid resin composition for foaming.

The kneading step and the foaming step may be performed at the same time or in separate steps.

The method of vaporizing the compressible fluid that has dissolved in the polylactic acid resin composition in the foaming step is, for example, a method of reducing the pressure of the polylactic acid resin composition by placing the polylactic acid resin composition in open air. Thereby, the compressible fluid is gradually replaced with air under open air, and can be removed from the foamed sheet.

-Molding step-

The molding step is a step of obtaining a foamed sheet by molding, into a sheet, the polylactic acid resin composition from which the compressible fluid has been vaporized and removed in the foaming step.

No particular limitation is imposed on the method of molding into a sheet, which may be appropriately selected from publicly known methods. Examples thereof include vacuum molding, pressure molding, vacuum pressure molding, and press molding in which a mold is used to mold the polylactic acid-foamed body into a sheet, thereby forming a foamed sheet.

No particular limitation is imposed on the material of the mold for use in molding, which may be appropriately selected in accordance with the intended purpose. Examples thereof include S45C, S50C, SS400, SCM440, SUS316, SUS304, and equivalent materials thereto. The material of the mold for use in molding may be C2810, A5052, alumina, or the like for increasing thermal conductivity, or may be quartz glass or the like for analysis purposes. For increasing durability, the surface of the above materials of the mold for use in molding may be subjected to chrome plating or the like, or may be subjected to mirror polishing or the like for increasing release ability. Alternatively, the surface of the above materials of the mold for use in molding may be subjected to blasting or may be coated with a release agent. Of these, from the viewpoints of facilitation in production and increase in durability, the mold for use in molding is preferably a mold made of SCM440 subjected to chrome plating or the like. Furthermore, the mold may be, for example, a mold that is changeable in the structure thereof.

By the molding step, the polylactic acid-foamed body is molded into a sheet, thereby obtaining a sheet molded body that is the foamed sheet according to the present embodiment.

(Manufacture and production method of manufacture)

The manufacture includes the foamed body and further includes other optional components.

No particular limitation is imposed on the other components, which may be appropriately selected from those that are used in common resin products.

The concept of the manufacture includes not only an original fabric obtained by forming a sheet, which is the above-described molded body, into a roll as an intermediate product to be processed into the manufacture and a manufacture alone as a single product, but also parts formed of the manufacture **(e.g.,** a handle of a tray) and products provided with manufactures **(e.g.,** a tray with a handle).

Examples of the manufacture (which may be referred to as a "consumption material") include livingware such as bags, packaging containers, trays, dishware, cutlery, stationery, and cushioning materials. Also, the manufacture may be used for applications other than the livingware, and can be widely used for applications such as industrial materials, daily necessities, agricultural supplies, and sheets and packaging materials for foods, pharmaceuticals, and cosmetics.

Examples of the bags include plastic bags, shopping bags, and garbage bags.

Examples of the stationery include file folders and badges.

EXAMPLES

The present invention will be described below in more detail by way of Examples and Comparative Examples. However, the present invention should not be construed as being limited to these Examples. Note that, in the following Examples and Comparative Examples, unless otherwise specified, the unit "part(s)" means "part(s) by mass" and "%" means "% by mass".

(Example 1)

<Raw material mixing step>

Using the continuous polymerization apparatus 100 as illustrated in FIG. 3, L-lactide (Lumilact (registered trademark) L Polymer Grade, obtained from Total Corbion) was fed as the monomer from the tank 1 with the metering pump 2 at a flow rate of 1 kg/hour, 1,6-hexanediol (obtained from FUJIFILM Wako Pure Chemical Corporation) was fed as the initiator from the tank 3 with the metering pump 4 at a flow rate of 0.08 g/hour so as to be 1/10,000 mole with respect to 1 mole of the monomer (L-lactide), tin(II) (2-ethylhexanoate) (obtained from FUJIFILM Wako Pure Chemical Corporation) was fed as the catalyst from the tank 5 with the metering pump 6 at a flow rate of 0.05 g/hour, and carbon dioxide (purity: 99.999% by volume, obtained from Resonac Gas Products Corporation) was fed as the compressible fluid from the tank 7 with the metering pump 8 at 100 g/hour so as to be 10 parts by mass with respect to 100 parts by mass of the monomer (L-lactide), followed by mixing, melting, and kneading in the raw material mixing area a.

<Polymerization step>

Next, the raw material mixture was fed via the pressure regulation valve 17 to the polymerization area b, where the polymerization reaction was performed.

<Polymerization terminating step>

Next, acetic anhydride was fed as the end-capping agent from the tank 9 with the metering pump 10 at a flow rate of 10 g/hour (1 phr) (100-fold equivalent to the initiator) and was reacted with the polylactic acid resin in the polymerization reaction product.

<Monomer removing step>

Subsequently, in the monomer removing area c, using the vacuum pump 15 and the residual monomer removing trap 14, the residual monomer and the compressible fluid were removed from the polymerization reaction product, thereby obtaining a polylactic acid resin composition P.

The obtained polylactic acid resin composition P was taken out as a strand from an extrusion nozzle (die) 16, and was passed through a cold-water bath for cooling, followed by pelletizing with a pelletizer to form a 2 mm-thick pellet. Note that, in Example 1, no additive was added.

The temperature conditions of the respective areas were set to 170°C in the raw material mixing area a, 200°C in the polymerization area b, and 185°C in the monomer removing area c. The pressure conditions of the respective areas and the other portions were set as follows. Specifically, the raw material mixing area a was set to an internal pressure of 100 kPa in an inert atmosphere, and the pressure regulation valve 17 at the inlet of an extruder was set to 10 MPa. The polymerization area b was set to 15 MPa. The monomer removing area c was set to 0.05 kPa, and the extrusion nozzle (die) portion was set to about 5 MPa; note that this setting depends on the pressure loss by the melt viscosity of the polylactic acid resin composition.

(Example 2)

A pellet of the polylactic acid resin composition P was obtained in the same manner as in Example 1, except that in the raw material mixing step of Example 1, the monomer fed from the tank 1 with the metering pump 2 was changed from the L-lactide only to a mixture (L-lactide:D-lactide = 95:5 (mass ratio)) of L-lactide (Lumilact (registered trademark) L Polymer Grade, obtained from Total Corbion) and D-lactide (Lumilact (registered trademark) D Polymer Grade, obtained from Total Corbion).

(Example 3)

A pellet of the polylactic acid resin composition P was obtained in the same manner as in Example 1, except that in the raw material mixing step of Example 1, the monomer fed from the tank 1 with the metering pump 2 was changed from the L-lactide only to a mixture (L-lactide:D-lactide = 90:10 (mass ratio)) of L-lactide (Lumilact (registered trademark) L Polymer Grade, obtained from Total Corbion) and D-lactide (Lumilact (registered trademark) D Polymer Grade, obtained from Total Corbion).

(Example 4)

A pellet of the polylactic acid resin composition P was obtained in the same manner as in Example 1, except that in the raw material mixing step of Example 1, the kind of the initiator was changed from 1,6-hexanediol to hexanol (obtained from Tokyo Chemical Industry Co., Ltd.).

(Example 5)

A pellet of the polylactic acid resin composition P was obtained in the same manner as in Example 1, except that in the raw material mixing step of Example 1, the kind of the initiator was changed from 1,6-hexanediol to glycerol (obtained from Tokyo Chemical Industry Co., Ltd.).

(Example 6)

A pellet of the polylactic acid resin composition P was obtained in the same manner as in Example 1, except that in the raw material mixing step of Example 1, the initiator was fed at a flow rate of 0.04 g/hour with the metering pump 4 so as to be 1/20,000 mole with respect to 1 mole of the monomer (L-lactide).

(Example 7)

A pellet of the polylactic acid resin composition P was obtained in the same manner as in Example 1, except that in the raw material mixing step of Example 1, the initiator was fed at a flow rate of 0.02 g/hour with the metering pump 4 so as to be 1/40,000 mole with respect to 1 mole of the monomer (L-lactide).

(Example 8)

A pellet of the polylactic acid resin composition P was obtained in the same manner as in Example 1, except that in the monomer removing step of Example 1, the following additive addition step was performed after the residual monomer and the compressible fluid were removed from the polymer reaction product by the vacuum pump 15 and the residual monomer removing trap 14 in the monomer removing area c and before the polylactic acid resin composition P was taken out as a strand from the extrusion nozzle (die) 16.

<Additive addition step>

Carbodiimide (CARBODILITE LA-1, obtained from Nisshinbo Chemical Inc.) was added as the additive (hydrolysis inhibitor) from the tank 11 so as to be 0.25% by mass with respect to the total amount of the polylactic acid resin composition by passage through a line of the metering feeder 12.

(Example 9)

A pellet of the polylactic acid resin composition P was obtained in the same manner as in Example 1, except that in the monomer removing step of Example 1, the following additive addition step was performed after the residual monomer and the compressible fluid were removed from the polymer reaction product by the vacuum pump 15 and the residual monomer removing trap 14 in the monomer removing area c and before the polylactic acid resin composition P was taken out as a strand from the extrusion nozzle (die) 16.

<Additive addition step>

Carbodiimide (CARBODILITE LA-1, obtained from Nisshinbo Chemical Inc.) was added as the additive (hydrolysis inhibitor) from the tank 11 so as to be 0.50% by mass with respect to the total amount of the polylactic acid resin composition by passage through a line of the metering feeder 12.

(Example 10)

A pellet of the polylactic acid resin composition P was obtained in the same manner as in Example 1, except that in the raw material mixing step of Example 1, carbon dioxide serving as the compressible fluid was fed with the metering pump 8 at 30 g/hour so as to be 3 parts by mass with respect to 100 parts by mass of the monomer (lactide).

(Example 11)

A pellet of the polylactic acid resin composition P was obtained in the same manner as in Example 1, except that in the raw material mixing step of Example 1, carbon dioxide serving as the compressible fluid was fed with the metering pump 8 at 50 g/hour so as to be 5 parts by mass with respect to 100 parts by mass of the monomer (lactide).

(Example 12)

A pellet of the polylactic acid resin composition P was obtained in the same manner as in Example 1, except that in the raw material mixing step of Example 1, carbon dioxide serving as the compressible fluid was fed with the metering pump 8 at 200 g/hour so as to be 20 parts by mass with respect to 100 parts by mass of the monomer (L-lactide).

(Example 13)

A pellet of the polylactic acid resin composition P was obtained in the same manner as in Example 1, except that in the polymerization step of Example 1, the pressure of the pressure regulation valve 17 at the inlet of the extruder was changed from 10 MPa to 25 MPa.

(Example 14)

A pellet of the polylactic acid resin composition P was obtained in the same manner as in Example 1, except that in the polymerization terminating step of Example 1, the kind of the end-capping agent was changed from acetic anhydride to acetic acid (grade: special grade, obtained from KANTO CHEMICAL CO., LTD.).

(Example 15)

A pellet of the polylactic acid resin composition P was obtained in the same manner as in Example 1, except that in the polymerization terminating step of Example 1, the kind of the end-capping agent was changed from acetic anhydride to citric acid (obtained from KANTO CHEMICAL CO., LTD.).

(Example 16)

A pellet of the polylactic acid resin composition P was obtained in the same manner as in Example 1, except that in the monomer removing step of Example 1, the following additive addition step was performed after the residual monomer and the compressible fluid were removed from the polymer reaction product by the vacuum pump 15 and the residual monomer removing trap 14 in the monomer removing area c and before the polylactic acid resin composition P was taken out as a strand from the extrusion nozzle (die) 16.

<Additive addition step>

Hindered phenol (3-(3,5-di-tert-butyl-4-hydroxyphenol) propionate, Irganox 1010, obtained from BASF Japan) was added as the additive (antioxidant) from the tank 11 so as to be 0.20% by mass with respect to the total amount of the polylactic acid resin composition by passage through a line of the metering feeder 12.

(Example 17)

A pellet of the polylactic acid resin composition P was obtained in the same manner as in Example 1, except that in the raw material mixing step of Example 1, the initiator was fed at a flow rate of 0.04 g/hour with the metering pump 4 so as to be 1/20,000 mole with respect to 1 mole of the monomer (L-lactide) and that in the monomer removing step of Example 1, the following additive addition step was performed after the residual monomer and the compressible fluid were removed from the polymer reaction product by the vacuum pump 15 and the residual monomer removing trap 14 in the monomer removing area c and before the polylactic acid resin composition P was taken out as a strand from the extrusion nozzle (die) 16.

<Additive addition step>

Triethyl phosphonoacetate (obtained from Nacalai Tesque) was added as the additive (polymerization terminator) from the tank 11 so as to be 0.20% by mass with respect to the total amount of the polylactic acid resin composition by passage through a line of the metering feeder 12.

(Example 18)

A pellet of the polylactic acid resin composition P was obtained in the same manner as in Example 1, except that in the monomer removing step of Example 1, the following additive addition step was performed after the residual monomer and the compressible fluid were removed from the polymer reaction product by the vacuum pump 15 and the residual monomer removing trap 14 in the monomer removing area c and before the polylactic acid resin composition P was taken out as a strand from the extrusion nozzle (die) 16.

<Additive addition step>

Carbodiimide (CARBODILITE LA-1, obtained from Nisshinbo Chemical Inc.) was added as the additive (hydrolysis inhibitor) from the tank 11 so as to be 0.50% by mass with respect to the total amount of the polylactic acid resin composition by passage through a line of the metering feeder 12. Also, triethyl phosphonoacetate (obtained from Nacalai Tesque) was added as the additive (polymerization terminator) from the tank 11 so as to be 0.20% by mass with respect to the total amount of the polylactic acid resin composition by passage through a line of the metering feeder 12.

(Comparative Example 1)

A pellet of the polylactic acid resin composition P was obtained in the same manner as in Example 1, except that in the raw material mixing step of Example 1, the monomer fed from the tank 1 with the metering pump 2 was changed from the L-lactide only to a mixture (L-lactide:D-lactide = 70:30 (mass ratio)) of L-lactide (Lumilact (registered trademark) L Polymer Grade, obtained from Total Corbion) and D-lactide (Lumilact (registered trademark) D Polymer Grade, obtained from Total Corbion).

(Comparative Example 2)

A pellet of the polylactic acid resin composition P was obtained in the same manner as in Example 1, except that in the raw material mixing step of Example 1, the initiator was fed at a flow rate of 0.8 g/hour with the metering pump 4 so as to be 1/1,000 mole with respect to 1 mole of the monomer (L-lactide).

(Comparative Example 3)

A pellet of the polylactic acid resin composition P was obtained in the same manner as in Example 1, except that in the raw material mixing step of Example 1, the initiator was fed at a flow rate 0.02 g/hour with the metering pump 4 so as to be 1/40,000 mole with respect to 1 mole of the monomer (L-lactide), carbon dioxide serving as the compressible fluid was not fed, and further the polymerization terminating step was not performed (i.e., the acetic anhydride serving as the end-capping agent was not added).

(Comparative Example 4)

A pellet of the polylactic acid resin composition P was obtained in the same manner as in Example 1, except that unlike in Example 1, feeding carbon dioxide (purity: 99.999% by volume, obtained from Resonac Gas Products Corporation) as the compressible fluid from the tank 7 at 50 g/hour with the metering pump 8 so as to be 10 parts by mass with respect to 100 parts by mass of the monomer (lactide) was changed to feeding carbon dioxide (purity: 99.999% by volume, obtained from Resonac Gas Products Corporation) as the compressible fluid from the tank 7 at 16.7 g/hour with the metering pump 8 so as to be 3 parts by mass with respect to 100 parts by mass of the monomer (lactide).

(Comparative Example 5)

A hermetically-sealed SUS-made 500-mL volume batch container was charged with: 200 g of L-lactide (Lumilact (registered trademark) L Polymer Grade, obtained from Total Corbion) serving as the monomer; 1,6-hexanediol (obtained from FUJIFILM Wako Pure Chemical Corporation) serving as the initiator so as to be 1/10,000 mole with respect to 1 mole of the monomer (L-lactide); and tin (II) (2-ethylhexanoate) (obtained from FUJIFILM Wako Pure Chemical Corporation) serving as the catalyst so as to be 200 ppm with respect to the monomer. Purging with nitrogen was repeated five times. Then, the hermetically-sealed batch container equipped with a helical ribbon-type impellor obtained from Toyo Koatsu Inc. was heated at 140°C, thereby performing solid-phase polymerization. After one week from the solid-phase polymerization, the obtained polylactic acid resin composition was taken out.

<Evaluation 1>

The polylactic acid resin in the polylactic acid resin composition obtained in each of Examples 1 to 18 and Comparative Examples 1 to 5 was measured by the following methods for the melting point, the molecular weight, and the optical purity of L-lactic acid. Also, the polylactic acid resin composition was measured by the following methods for the amount of the residual ring-opening polymerizable monomer, the YI, the complex viscosity (melt stability), and the melt mass-flow rate (MFR). The results were given in Table 1 to Table 5 below.

<<Measurement of the melting point>>

The melting point of the polylactic acid resin in the polylactic acid resin composition obtained in each of Examples 1 to 18 and Comparative Examples 1 to 5 was measured through differential scanning calorimetry (DSC) according to JIS K 7122-1987 (Testing Methods for Heat of Transitions of Plastics).

Specifically, a differential scanning calorimeter (Model Q-2000, obtained from TA Instruments, Inc.) was used. The polylactic acid resin composition in the form of a pellet was cut with nippers, thereby forming a measurement sample. The measurement sample of 5 mg was placed in a dedicated pan obtained from TA Instruments, Inc., and subjected to measurement. The measurement sample was placed in a vessel of the differential scanning calorimeter, and heated from 10°C through 200°C at a heating rate of 10 °C/min. The melting point of the polylactic acid resin was defined as a peak top temperature of an endothermic peak observed in a temperature range equal to or higher than the glass transition temperature when after the 1st cooling, the measurement sample was heated again from 25°C to 200°C for scanning at a rate of 10 °C/min. The results of the melting point were given in Table 1 to Table 5 below.

<<Measurement of the molecular weight>>

The molecular weight of the polylactic acid resin in the polylactic acid resin composition obtained in each of Examples 1 to 18 and Comparative Examples 1 to 5 was measured through gel permeation chromatography (GPC).

Specifically, the polylactic acid resin composition was dissolved in chloroform to have a concentration of 0.5% by mass, thereby preparing a measurement sample. The prepared measurement sample (1 mL) was injected and measured under analysis conditions below. Separately, monodispersed polystyrene reference samples (obtained from TOSOH CORPORATION) were subjected to gel permeation chromatography in the same manner to previously create a calibration curve for molecular weights.

From the molecular weight distribution of the polylactic acid resin, the number average molecular weight (Mn) and the weight average molecular weight (Mw) of the polylactic acid resin in the polylactic acid resin composition were calculated using the calibration curve for molecular weights. Note that, the molecular weight distribution is a value of (Mw/Mn) obtained by dividing Mw by Mn. The results of the weight average molecular weight (Mw) were given in Table 1 to Table 5 below.

[Analysis Conditions]

- Device: GPC-8020 (obtained from TOSOH CORPORATION)
- Column: TSKgel (registered trademark) G2000HXL and G4000HXL (obtained from TOSOH CORPORATION)
- Temperature: 40°C
- Solvent: Chloroform
- Injection amount: 1 mL
- Flow rate: 1.0 mL/min

<<Measurement of optical purity of L-lactic acid>>

The optical purity of L-lactic acid in the polylactic acid resin composition obtained in each of Examples 1 to 18 and Comparative Examples 1 to 5 was measured through high performance liquid chromatography (HPLC) under analysis conditions below.

Specifically, the polylactic acid resin composition was frozen and crushed, and 0.1 g of the powder was weighed and added to 5 mL of a 1N aqueous sodium hydroxide solution. The mixture was refluxed for about 4 hours at room temperature (25°C) for hydrolysis. The solution after refluxing was neutralized with 1 mol/L sulfuric acid to prepare a measurement sample. The measurement sample was subjected to HPLC analysis.

[Analysis Conditions]

- Device: PU-2085 plus series (obtained from JASCO Corporation)
- Column: Chromolith (registered trademark) coated with SUMICHIRAL OA-5000 (inner diameter: 4.6 mm, length: 150 mm, obtained from Sumika Chemical Analysis Service, Ltd.)
- Column temperature: 25°C
- Mobile phase: a liquid mixture of a 2 mM $CuSO_4$ aqueous solution and 2-propanol (2 mM $CuSO_4$ aqueous solution:2-propanol = 95:5 (volume ratio))
- Flow rate: 1.0 mL/min
- Detector: UV (254 nm)
- Injection amount: 20 $\mu$L

A reference sample of L-lactic acid (obtained from Corbion) and a reference sample of D-lactic acid (obtained from Corbion) were subjected to HPLC analysis in the same manner to previously create respective calibration curves.

From peak areas of L-lactic acid and D-lactic acid obtained through HPLC analysis, the amounts thereof were calculated based on the calibration curves, and the optical purity of L-lactic acid was calculated based on formula (1) below. The results of the optical purity of L-lactic acid were given in Table 1 to Table 5 below.

Optical purity (%) of L-lactic acid = 100× (Amount of L form - Amount of D form)/(Amount of L form + Amount of D form)          Formula (1)

In the formula (1), "Amount of L form" indicates an amount (% by mass) of L-lactic acid obtained through HPLC analysis, and "Amount of D form" indicates an amount (% by mass) of D-lactic acid obtained through HPLC analysis.

<<Measurement of the yellowness index (YI)>>

The yellowness index (YI) of the polylactic acid resin composition obtained in each of Examples 1 to 18 and Comparative Examples 1 to 5 was measured according to JIS K 7103:1977 (Testing methods for yellowness index and change of yellowness index of plastics).

A 2 mm-thick pellet of the polylactic acid resin composition obtained in each of Examples 1 to 18 and Comparative Examples 1 to 5 was used as a measurement sample, and measured using a color meter (SM-T, obtained from Suga Test Instruments Co., Ltd.) to determine the yellowness index (YI). The polylactic acid resin composition having the YI of 25 or lower was evaluated as a favorable polylactic acid resin composition.

<<Measurement of the amount of the residual ring-opening polymerizable monomer>>

The amount of the residual ring-opening polymerizable monomer in the polylactic acid resin composition obtained in each of Examples 1 to 18 and Comparative Examples 1 to 5 was determined according to the measurement method of the amount of the ring-opening polymerizable monomer described in "Voluntary Standards for Polyolefin and Other Synthetic Resin Food Containers and Packaging, 3rd Revised Edition, June 2004 Supplement, Part 3, Hygiene Test Methods, P13".

Specifically, the polylactic acid resin composition (0.1 g) was uniformly dissolved in dichloromethane (5 mL). By addition of a 2 mM $CuSO_4$ aqueous solution/2-propanol=95/5 (volume ratio), the polylactic acid resin composition was re-precipitated. The obtained supernatant was subjected to HPLC, and the ring-opening polymerizable monomer was separated and quantified by the internal standard method under analysis conditions below. Thereby, the amount of the residual ring-opening polymerizable monomer in the polylactic acid resin composition was measured.

Table 1 to Table 5 below gave the results of the amount of the residual ring-opening polymerizable monomer. The unit "ppm" in Table 1 to Table 5 indicates a mass fraction.

[Analysis Conditions]

- Device: Preparative purification HPLC system (obtained from JASCO Corporation)
- Analysis column: SUMICHIRAL OA-5000 (inner diameter: 4.6 mm, length: 150 mm, particle diameter: 5 $\mu$m, obtained from Sumika Chemical Analysis Service, Ltd.)
- Mobile phase: 2 mM $CuSO_4$ aqueous solution/2-propanol=95/5 (volume ratio)
- Internal standard: 2,6-dimethyl-y pyrone
- Flow rate: 1.0 mL/min
- Column temperature: 25°C
- Detector: Photodiode array detector (PDA) (UV: 254 nm)
- Injection amount upon measurement: 20 $\mu$L

<<Measurement of the complex viscosity>>

The complex viscosity of the pellet of the polylactic acid resin composition obtained in each of Examples 1 to 18 and Comparative Examples 1 to 5 was measured using the parallel plate-type rotary viscometer (ARES-G2, obtained from TA Instruments, Inc.).

The pellet of the polylactic acid resin composition was dried at 80°C for 12 hours, thereby preparing measurement sample A.

Also, the pellet of the polylactic acid resin composition was dried at 80°C for 12 hours, and left to stand still for one day in an environment of 23°C and 50RH%, thereby preparing measurement sample B.

On a jig for measurement, the measurement sample A and the measurement sample B were left at 200°C for 5 minutes and melted. Subsequently, the resulting product was pressed until the gap between the parallel plates would reach 1.05 mm. Next, the polylactic acid-including composition outflowing from the circumferential portion of the parallel plates was scraped off with a spatula. The resulting product was pressed again until the gap between the parallel plates would reach 1.00 mm. The resulting product was left to stand still for 5 minutes to remove residual stress, thereby preparing a measurement sample as a strip that is 30 $\mu$m thick, 7 mm wide, and 35 mm long. This measurement sample was used and measured for the complex viscosity $\eta^*_{(5)}$ 5 minutes after the start of measurement under measurement conditions below and the complex viscosity $\eta^*_{(20)}$ 20 minutes after the start of measurement under measurement conditions below:

[Measurement Conditions]

- Parallel plates: 20 mm in diameter, made of aluminum;
- Temperature: 200°C;
- Gap between the parallel plates: 1.00 mm;
- Frequency: 1 Hz (6.28 rad/s);
- Atmosphere: under dry air (dew point: -60°C); and
- Size of the measurement sample: a strip that is 30 $\mu$m thick, 7 mm wide, and 35 mm long.

From the measured values, the ratio $[\eta^*_{(20)}/\eta^*_{(5)}]$ of the complex viscosity $\eta^*_{(20)}$ to the complex viscosity $\eta^*_{(5)}$ for the measurement sample A and the measurement sample B was obtained. Table 1 to Table 5 gave the measured values of the complex viscosity $\eta^*_{(20)}$ of the measurement sample A, and the ratios $[\eta^*_{(20)}/\eta^*_{(5)}]$ of the measurement sample A and the measurement sample B.

<<Measurement of the melt mass-flow rate (MFR)>>

The melt mass-flow rate (MFR) of the pellet of the polylactic acid resin composition obtained in each of Examples 1 to 18 and Comparative Examples 1 to 5 was measured according to JIS K 7210-1:2014 using a melt mass-flow rate measurement device (obtained from Dynisco, Model D405913) under conditions of 190°C and a load of 2.16 kg.

Table 1

| | | Example 1 | Example 2 | Example 3 | Example 4 | Example 5 |
|---|---|---|---|---|---|---|
| Monomer | L-lactide [parts by mass] | 100 | 95 | 90 | 100 | 100 |
| | D-lactide [parts by mass] | 0 | 5 | 10 | 0 | 0 |
| Initiator | Kind | 1,6-Hexanediol | 1,6-Hexanediol | 1,6-Hexanediol | Hexanol | Glycerol |
| | Amount (vs. monomer) [mol] | 1/10000 | 1/10000 | 1/10000 | 1/10000 | 1/10000 |
| Catalyst | Kind | Tin(II) 2-ethylhexanoate | Tin(II) 2-ethylhexanoate | Tin(II) 2-ethylhexanoate | Tin(II) 2-ethylhexanoate | Tin(II) 2-ethylhexanoate |
| | Amount of catalyst (vs. lactide) [ppm] | 200 | 200 | 200 | 200 | 200 |
| Hydrolysis inhibitor | Kind | - | - | - | - | - |
| | Amount (vs. polylactic acid resin composition) [% by mass] | - | - | - | - | - |
| Additive | Kind | - | - | - | - | - |
| | Amount (vs. polylactic acid resin composition) [% by mass] | - | - | - | - | - |
| End-capping agent | Kind | Acetic anhydride | Acetic anhydride | Acetic anhydride | Acetic anhydride | Acetic anhydride |
| Compressible fluid | Kind | Carbon dioxide | Carbon dioxide | Carbon dioxide | Carbon dioxide | Carbon dioxide |
| | Amount (vs. monomer) [parts by mass] | 10 | 10 | 10 | 10 | 10 |
| | Injection pressure [Mpa] | 10 | 10 | 10 | 10 | 10 |
| | Melting point [°C] | 179 | 160 | - | 178 | 177 |
| | Weight average molecular weight (Mw $\times 10^3$) | 350 | 330 | 320 | 335 | 310 |
| Quality of polylactic acid resin | Optical purity of L-lactic acid [%] | 99.9 | 94.8 | 90.2 | 99.8 | 99.7 |
| | Amount of residual monomer [ppm] | 100 | 120 | 150 | 120 | 170 |
| | Melt flow rate (190°C) [g/10 min] | 0.8 | 1.1 | 1.3 | 1.2 | 1.5 |
| | YI | 4 | 6 | 8 | 4 | 6 |

(continued)

| | | Example 1 | Example 2 | Example 3 | Example 4 | Example 5 |
|---|---|---|---|---|---|---|
| | Amount of polylactic acid resin (vs. total mass of organic substances) [% by mass] | 100.0 | 100.0 | 100.0 | 100.0 | 100.0 |
| Melt stability | $\eta^{*}_{(20)}$ ($\times 10^3$) [Pa] | 3.20 | 3.10 | 2.70 | 2.90 | 2.70 |
| | Ratio $[\eta^{*}_{(20)}/\eta^{*}_{(5)}]$ (Measurement sample A) | 0.90 | 0.85 | 0.80 | 0.86 | 0.81 |
| | Ratio $[\eta^{*}_{(20)}/\eta^{*}_{(5)}]$ (Measurement sample B) | 0.89 | 0.85 | 0.78 | 0.85 | 0.81 |

Table 2

| | | Example 6 | Example 7 | Example 8 | Example 9 | Example 10 |
|---|---|---|---|---|---|---|
| Monomer | L-lactide [parts by mass] | 100 | 100 | 100 | 100 | 100 |
| | D-lactide [parts by mass] | 0 | 0 | 0 | 0 | 0 |
| Initiator | Kind | 1,6-Hexanediol | 1,6-Hexanediol | 1,6-Hexanediol | 1,6-Hexanediol | 1,6-Hexanediol |
| | Amount (vs. monomer) [mol] | 1/20000 | 1/40000 | 1/10000 | 1/10000 | 1/10000 |
| Catalyst | Kind | Tin(II) 2-ethylhex-anoate | Tin(II) 2-ethylhex-anoate | Tin(II) 2-ethylhex-anoate | Tin(II) 2-ethylhex-anoate | Tin(II) 2-ethylhex-anoate |
| | Amount of catalyst (vs. lactide) [ppm] | 200 | 200 | 200 | 200 | 200 |
| Hydrolysis inhibitor | Kind | - | - | Carbodiimide | Carbodiimide | - |
| | Amount (vs. polylactic acid resin composition) [% by mass] | - | - | 0.25 | 0.50 | - |
| Additive | Kind | - | - | - | - | - |
| | Amount (vs. polylactic acid resin composition) [% by mass] | - | - | - | - | - |
| End-capping agent | Kind | Acetic anhydride | Acetic anhydride | Acetic anhydride | Acetic anhydride | Acetic anhydride |
| Compressible fluid | Kind | Carbon dioxide | Carbon dioxide | Carbon dioxide | Carbon dioxide | Carbon dioxide |
| | Amount (vs. monomer) [parts by mass] | 10 | 10 | 10 | 10 | 3 |
| | Injection pressure [Mpa] | 10 | 10 | 10 | 10 | 10 |
| Quality of polylactic acid resin | Melting point [°C] | 178 | 179 | 180 | 179 | 178 |
| | Weight average molecular weight (Mw x $10^3$) | 380 | 520 | 330 | 340 | 350 |
| | Optical purity of L-lactic acid [%] | 99.9 | 99.8 | 99.7 | 99.6 | 99.9 |
| | Amount of residual monomer [ppm] | 150 | 220 | 100 | 80 | 100 |
| | Melt flow rate (190°C) [g/10 min] | 0.6 | 0.4 | 0.6 | 0.5 | 0.9 |
| | YI | 3 | 5 | 4 | 2 | 12 |

(continued)

| | Example 6 | Example 7 | Example 8 | Example 9 | Example 10 |
|---|---|---|---|---|---|
| Amount of polylactic acid resin (vs. total mass of organic substances) [% by mass] | 100.0 | 100.0 | 99.8 | 99.5 | 100.0 |
| $\eta^*_{(20)}$ ($\times 10^3$) [Pa] | 5.20 | 8.20 | 3.50 | 3.60 | 3.03 |
| Melt stability — Ratio [$\eta^*_{(20)}/\eta^*_{(5)}$] (Measurement sample A) | 0.85 | 0.78 | 0.94 | 0.95 | 0.85 |
| Ratio [$\eta^*_{(20)}/\eta^*_{(5)}$] (Measurement sample B) | 0.84 | 0.78 | 0.92 | 0.94 | 0.81 |

Table 3

| | | Example Exemple11 | Example 12 | Example 13 | Example 14 | Example 15 |
|---|---|---|---|---|---|---|
| Monomer | L-lactide [parts by mass] | 100 | 100 | 100 | 100 | 100 |
| | D-lactide [parts by mass] | 0 | 0 | 0 | 0 | 0 |
| Initiator | Kind | 1,6-Hexanediol | 1,6-Hexanediol | 1,6-Hexanediol | 1,6-Hexanediol | 1,6-Hexanediol |
| | Amount (vs. monomer) [mol] | 1/10000 | 1/10000 | 1/10000 | 1/10000 | 1/10000 |
| Catalyst | Kind | Tin(II) 2-ethylhex-anoate | Tin(II) 2-ethylhex-anoate | Tin(II) 2-ethylhex-anoate | Tin(II) 2-ethylhex-anoate | Tin(II) 2-ethylhex-anoate |
| | Amount of catalyst (vs. lactide) [ppm] | 200 | 200 | 200 | 200 | 200 |
| Hydrolysis inhibitor | Kind | - | - | - | - | - |
| | Amount (vs. polylactic acid resin composition) [% by mass] | - | - | - | - | - |
| Additive | Kind | - | - | - | - | - |
| | Amount (vs. polylactic acid resin composition) [% by mass] | - | - | - | - | - |
| End-capping agent | Kind | Acetic anhydride | Acetic anhydride | Acetic anhydride | Acetic acid | Citric acid |
| Compressible fluid | Kind | Carbon dioxide | Carbon dioxide | Carbon dioxide | Carbon dioxide | Carbon dioxide |
| | Amount (vs. monomer) [parts by mass] | 5 | 20 | 10 | 10 | 10 |
| | Injection pressure [Mpa] | 10 | 10 | 25 | 10 | 10 |
| Quality of polylactic acid resin | Melting point [°C] | 178 | 179 | 180 | 178 | 179 |
| | Weight average molecular weight (Mw $\times 10^3$) | 305 | 340 | 330 | 300 | 300 |
| | Optical purity of L-lactic acid [%] | 99.4 | 99.9 | 99.7 | 99.8 | 99.8 |
| | Amount of residual monomer [ppm] | 200 | 100 | 80 | 120 | 140 |
| | Melt flow rate (190°C) [g/10 min] | 0.8 | 0.6 | 0.6 | 1.2 | 1.4 |
| | YI | 8 | 5 | 6 | 6 | 9 |

| | | | Example Exemple11 | Example 12 | Example 13 | Example 14 | Example 15 |
|---|---|---|---|---|---|---|---|
| | Amount of polylactic acid resin (vs. total mass of organic substances) [% by mass] | | 100.0 | 100.0 | 100.0 | 100.0 | 100.0 |
| | Melt stability | $\eta^*_{(20)}(\times 10^3)$ [Pa] | 3.10 | 3.30 | 3.50 | 2.70 | 2.50 |
| | | Ratio $[\eta^*_{(20)}/\eta^*_{(5)}]$ (Measurement sample A) | 0.88 | 0.92 | 0.92 | 0.82 | 0.78 |
| | | Ratio $[\eta^*_{(20)}/\eta^*_{(5)}]$ (Measurement sample B) | 0.87 | 0.91 | 0.90 | 0.80 | 0.77 |

EP 4 335 887 B1

Table 4

| | | Example 16 | Example 17 | Example 18 |
|---|---|---|---|---|
| Monomer | L-lactide [parts by mass] | 100 | 100 | 100 |
| | D-lactide [parts by mass] | 0 | 0 | 0 |
| Initiator | Kind | 1,6-Hexanediol | 1,6-Hexanediol | 1,6-Hexanediol |
| | Amount (vs. monomer) [mol] | 1/10000 | 1/20000 | 1/10000 |
| Catalyst | Kind | Tin(II) 2-ethylhex-anoate | Tin(II) 2-ethylhex-anoate | Tin(II) 2-ethylhex-anoate |
| | Amount of catalyst (vs. lactide) [ppm] | 200 | 200 | 200 |
| Hydrolysis inhibitor | Kind | - | - | Carbodiimide |
| | Amount (vs. polylactic acid resin composition) [% by mass] | - | - | 0.50 |
| Additive | Kind | Hindered phenol | Triethyl phospho-noacetate | Triethyl phospho-noacetate |
| | Amount (vs. polylactic acid resin composition) [% by mass] | 0.20 | 0.20 | 0.20 |
| End-capping agent | Kind | Acetic anhydride | Acetic anhydride | Acetic anhydride |
| Compressible fluid | Kind | Carbon dioxide | Carbon dioxide | Carbon dioxide |
| | Amount (vs. monomer) [parts by mass] | 10 | 10 | 10 |
| | Injection pressure [Mpa] | 10 | 10 | 10 |
| Quality of polylactic acid resin | Melting point [°C] | 179 | 179 | 180 |
| | Weight average molecular weight (Mw $\times 10^3$) | 350 | 420 | 350 |
| | Optical purity of L-lactic acid [%] | 99.9 | 99.7 | 99.7 |
| | Amount of residual monomer [ppm] | 120 | 100 | 160 |
| | Melt flow rate (190°C) [g/10 min] | 0.6 | 0.5 | 0.4 |
| | YI | 3 | 4 | 2 |
| | Amount of polylactic acid resin (vs. total mass of organic substances) [% by mass] | 100.0 | 100.0 | 100.0 |
| | Melt stability | $\eta^*_{(20)}(\times 10^3)$ [Pa] | 3.30 | 10.20 | 4.80 |
| | | Ratio [$\eta^*_{(20)}/\eta^*_{(5)}$] (Measurement sample A) | 0.85 | 0.90 | 0.95 |
| | | Ratio [$\eta^*_{(20)}/\eta^*_{(5)}$] (Measurement sample B) | 0.84 | 0.90 | 0.95 |

Table 5

| | | Comparative Example 1 | Comparative Example 2 | Comparative Example 3 | Comparative Example 4 | Comparative Example 5 |
|---|---|---|---|---|---|---|
| Monomer | L-lactide [parts by mass] | 70 | 100 | 100 | 100 | 100 |
| | D-lactide [parts by mass] | 30 | 0 | 0 | 0 | 0 |
| Initiator | Kind | 1,6-Hexanediol | 1,6-Hexanediol | 1,6-Hexanediol | 1,6-Hexanediol | 1,6-Hexanediol |
| | Amount (vs. monomer) [mol] | 1/10000 | 1/1000 | 1/40000 | 1/10000 | 1/10000 |
| Catalyst | Kind | Tin(II) 2-ethylhexanoate | Tin(II) 2-ethylhexanoate | Tin(II) 2-ethylhexanoate | Tin(II) 2-ethylhexanoate | Tin(II) 2-ethylhexanoate |
| | Amount of catalyst (vs. lactide) [ppm] | 200 | 200 | 200 | 200 | 200 |
| Hydrolysis inhibitor | Kind | - | - | - | - | - |
| | Amount (vs. polylactic acid resin composition) [% by mass] | - | - | - | - | - |
| Additive | Kind | - | - | - | - | - |
| | Amount (vs. polylactic acid resin composition) [% by mass] | - | - | - | - | - |
| End-capping agent | Kind | Acetic anhydride | Acetic anhydride | - | Acetic anhydride | - |
| Compressible fluid | Kind | Carbon dioxide | Carbon dioxide | - | Carbon dioxide | - |
| | Amount (vs. monomer) [parts by mass] | 10 | 10 | - | 3 | - |
| | Injection pressure [Mpa] | 10 | 10 | - | 10 | - |
| | Melting point [°C] | - | 179 | 177 | 176 | 177 |
| | Weight average molecular weight (Mw ×10³) | 330 | 240 | 310 | 350 | 520 |
| | Optical purity of L-lactic acid [%] | 69.0 | 99.0 | 99.9 | 99.9 | 99.9 |
| | Amount of residual monomer [ppm] | 380 | 200 | 100 | 100 | 300 |
| Quality of polylactic acid resin | Melt flow rate (190°C) [g/10 min] | 2.4 | 2.2 | 1.5 | 2.6 | 26 |
| | YI | 28 | 14 | 26 | 25 | 29 |

(continued)

| | Comparative Example 1 | Comparative Example 2 | Comparative Example 3 | Comparative Example 4 | Comparative Example 5 |
|---|---|---|---|---|---|
| Amount of polylactic acid resin (vs. total mass of organic substances) [% by mass] | 100.0 | 100.0 | 100.0 | 100.0 | 100.0 |
| $\eta^*_{(20)}(\times 10^3)$ [Pa] | 0.80 | 0.30 | 0.90 | 1.20 | 1.80 |
| Melt stability — Ratio $[\eta^*_{(20)}/\eta^*_{(5)}]$ (Measurement sample A) | 0.67 | 0.66 | 0.68 | 0.82 | 0.45 |
| Melt stability — Ratio $[\eta^*_{(20)}/\eta^*_{(5)}]$ (Measurement sample B) | 0.58 | 0.64 | 0.62 | 0.78 | 0.38 |

(Production Examples 1 to 18 and Comparative 5 Production Examples 1 to 5)

The polylactic acid resin composition obtained in each of Examples 1 to 18 and Comparative Examples 1 to 5 was used to produce a polylactic acid monofilament by the following method.

Specifically, the polylactic acid resin composition was melt-kneaded at 200°C, extruded from a nozzle, and guided into a cooling bath for solidification by cooling, thereby producing an unstretched yarn. Subsequently, at a spinning speed of 150 m/min, the unstretched yarn was subjected to a first-step stretch under conditions of 100°C and 4.0 fold and further to a second-step stretch under conditions of 190°C and 2.0 fold, such that the unstretched yarn was 8.0-fold stretched in total. Next, heat setting was performed under conditions of 200°C and 0.90 fold, thereby producing polylactic acid monofilaments 0.4 mm each in diameter of Production Examples 1 to 18 and Comparative Production Examples 1 to 5.

<Evaluation 2>

The polylactic acid monofilaments obtained in Production Examples 1 to 18 and Comparative Production Examples 1 to 5 were measured for tensile strength by the following method. The results were given in Table 6 below.

<<Measurement of tensile strength>>

According to Section 8.5 (tensile strength and elongation) of JIS L 1013:2021 (Testing methods for man-made filament yarns), the polylactic acid monofilament having a yarn length of 250 mm was measured at a tensile speed of 300 mm/min, thereby determining a tensile strength at break (N). The tensile strength (N) was divided by the fineness (dtex) of the polylactic acid monofilament, thereby calculating a tensile strength (cN/dtex). This measurement and this calculation were performed for 10 polylactic acid monofilaments obtained in each of Production Examples 1 to 18 and Comparative Production Examples 1 to 5, followed by calculation of an average value thereof, and the strength of the polylactic acid monofilament was evaluated based on the following evaluation criteria.

[Evaluation criteria of the strength of the polylactic acid monofilament]

A: The average tensile strength of the 10 polylactic acid monofilaments was 4.0 cN/dtax or more.
B: The average tensile strength of the 10 polylactic acid monofilaments was 3.5 cN/dtax or more and less than 4.0 cN/dtax.
C: The average tensile strength of the 10 polylactic acid monofilaments was 3.0 cN/dtax or more and less than 3.5 cN/dtax.
D: The average tensile strength of the 10 polylactic acid monofilaments was less than 3.0 cN/dtax.

Table 6

|  | Polylactic acid resin composition | Evaluation results of yarn |
|---|---|---|
| Production Example 1 | Example 1 | B |
| Production Example 2 | Example 2 | B |
| Production Example 3 | Example 3 | C |
| Production Example 4 | Example 4 | B |
| Production Example 5 | Example 5 | C |
| Production Example 6 | Example 6 | B |
| Production Example 7 | Example 7 | B |
| Production Example 8 | Example 8 | A |
| Production Example 9 | Example 9 | A |
| Production Example 10 | Example 10 | B |
| Production Example 11 | Example 11 | B |

(continued)

|  | Polylactic acid resin composition | Evaluation results of yarn |
|---|---|---|
| Production Example 12 | Example 12 | B |
| Production Example 13 | Example 13 | B |
| Production Example 14 | Example 14 | C |
| Production Example 15 | Example 15 | C |
| Production Example 16 | Example 16 | A |
| Production Example 17 | Example 17 | A |
| Production Example 18 | Example 18 | A |
| Comparative Production Example 1 | Comparative Example 1 | D |
| Comparative Production Example 2 | Comparative Example 2 | D |
| Comparative Production Example 3 | Comparative Example 3 | D |
| Comparative Production Example 4 | Comparative Example 4 | D |
| Comparative Production Example 5 | Comparative Example 5 | D |

Reference Signs List

a raw material mixing area
b polymerization area
c monomer removing area
1 tank
2 metering pump
3 tank
4 metering pump
5 tank
6 metering pump
7 tank
8 metering pump
9 tank
10 metering pump
11 tank
12 metering feeder
14 residual monomer removing trap
15 vacuum pump
16 extrusion nozzle
17 pressure regulation valve
100 continuous polymerization apparatus

Related-Art Documents

Patent Document

[Patent Document 1] Japanese Patent No. 6024299

Non-Patent Document

[Non-Patent Document 1] Satoshi Nagai, Masayuki Nagai, "Biopolymer Alloying Technology", Molding, Vol. 24, No. 8, 2012, pp. 444-448, "2.2 Thermal Properties of PLA/POM Alloy"

[Non-Patent Document 2] The Society of Polymer Science, Proceedings, 2010, Vol. 67, No. 9, pp. 537-540 [Patent Document 2] CN 110 628 193 A

**Claims**

1. A polylactic acid resin composition, comprising:

    a polylactic acid resin in an amount of 99% by mass or more, wherein
    a complex viscosity $\eta^*_{(20)}$ of the polylactic acid resin composition is $2\times10^3$ Pa·s or higher, and
    a ratio of the complex viscosity $\eta^*_{(20)}$ to a complex viscosity $\eta^*_{(5)}$, which is represented by [$\eta^*_{(20)}/\eta^*_{(5)}$], is 0.6 or higher,
    where the complex viscosity $\eta^*_{(5)}$ and the complex viscosity $\eta^*_{(20)}$ are complex viscosities respectively measured 5 minutes and 20 minutes after start of measurement using a parallel plate-type rotary viscometer under measurement conditions below:
    [Measurement Conditions]

    - Parallel plates: 20 mm in diameter, made of aluminum;
    - Temperature: 200°C;
    - Gap between the parallel plates: 1.00 mm;
    - Frequency: 1 Hz (6.28 rad/s);
    - Atmosphere: under dry air (dew point: -60°C); and
    - Size of measurement sample: a strip that is 30 $\mu$m thick, 7 mm wide, and 35 mm long,

    and wherein a weight average molecular weight of the polylactic acid resin is 300,000 or higher and 1,000,000 or lower, determined as indicated in the specification.

2. The polylactic acid resin composition according to claim 1, wherein the complex viscosity $\eta^*_{(20)}$ is $2.5\times10^3$ Pa·s or higher.

3. The polylactic acid resin composition according to claim 1, wherein the complex viscosity $\eta^*_{(20)}$ is $5\times10^3$ Pa·s or higher and the ratio [$\eta^*_{(20)}/\eta^*_{(5)}$] is 0.7 or higher.

4. The polylactic acid resin composition according to claim 1, wherein a melt mass-flow rate (MFR) of the polylactic acid resin composition is 2 g/10 min or lower, the melt mass-flow rate (MFR) being determined at 190°C and at a load of 2.16 kg according to JIS K 7210-1:2014.

5. The polylactic acid resin composition according to claim 1, further comprising an additive in an amount of less than 1% by mass of the polylactic acid resin composition, wherein
the additive binds to a reactive group that is a hydroxyl group, a carboxyl group, or both included in the polylactic acid resin.

6. The polylactic acid resin composition according to claim 5, wherein the additive is a carbodiimide compound.

7. The polylactic acid resin composition according to claim 1, further comprising an additive in an amount of less than 1% by mass of the polylactic acid resin composition, wherein
the additive is a compound including hindered phenol, phosphorus, or both.

8. The polylactic acid resin composition according to claim 1, wherein an unreacted monomer included in the polylactic acid resin composition is 5,000 ppm or less.

9. The polylactic acid resin composition according to claim 1, wherein the polylactic acid resin includes an L form of lactic acid in an amount of 90% by mole or more of a constituting monomer unit of the polylactic acid resin.

10. The polylactic acid resin composition according to claim 1, wherein a 2 mm-thick pellet of the polylactic acid resin composition has a yellowness index (YI) of 25 or lower as measured according to JIS K 7103:1977.

11. A polylactic acid resin composition according to claim 1, comprising:

polylactic acid obtained through ring-opening addition polymerization of lactide using a tin-based compound as a metal catalyst; and

monocarboxylic acid or monocarboxylic anhydride.

12. The polylactic acid resin composition according to claim 11, wherein the monocarboxylic acid is aliphatic monocarboxylic acid, and the monocarboxylic anhydride is aliphatic monocarboxylic anhydride.

13. The polylactic acid resin composition according to claim 11 or 12, wherein the monocarboxylic acid is acetic acid, and the monocarboxylic anhydride is acetic anhydride.

14. The polylactic acid resin composition according to claim 11 or 12, wherein the polylactic acid resin composition is obtained by addition of the monocarboxylic acid or the monocarboxylic anhydride to an environment including a compressible fluid.

## Patentansprüche

1. Polymilchsäureharzzusammensetzung, umfassend:

ein Polymilchsäureharz in einer Menge von 99 Massenprozent oder mehr, wobei eine komplexe Viskosität $\eta^*_{(20)}$ der Polymilchsäureharzzusammensetzung $2\times10^3$ Pa·s oder höher ist und ein Verhältnis der komplexen Viskosität $\eta^*_{(20)}$ zu einer komplexen Viskosität $\eta^*_{(5)}$, die durch $[\eta^*_{(20)}/\eta^*_{(5)}]$ dargestellt wird, 0,6 oder höher ist, wobei die komplexe Viskosität $\eta^*_{(5)}$ und die komplexe Viskosität $\eta^*_{(20)}$ komplexe Viskositäten sind, die jeweils 5 Minuten und 20 Minuten nach Beginn der Messung unter den folgenden Messbedingungen mit einem Parallelplatten-Rotationsviskosimeter gemessen wurden:
[Messbedingungen]

- Parallelplatten: 20 mm Durchmesser, gefertigt aus Aluminium;
- Temperatur: 200 °C;
- Abstand zwischen den Parallelplatten: 1,00 mm;
- Frequenz: 1 Hz (6,28 rad/s);
- Atmosphäre: unter trockener Luft (Taupunkt: -60 °C); und
- Größe der Messprobe: ein Streifen mit einer Dicke von 30 $\mu$m, einer Breite von 7 mm und einer Länge von 35 mm,

und wobei das mittlere Molekulargewicht des Polymilchsäureharzes 300.000 oder höher und 1.000.000 oder niedriger ist, festgelegt wie in der Beschreibung angegeben.

2. Polymilchsäureharzzusammensetzung nach Anspruch 1, wobei die komplexe Viskosität $\eta^*_{(20)}$ $2,5\times10^3$ Pa·s oder höher ist.

3. Polymilchsäureharzzusammensetzung nach Anspruch 1, wobei die komplexe Viskosität $\eta^*_{(20)}$ $5\times10^3$ Pa·s oder höher ist und das Verhältnis $[\eta^*_{(20)}/\eta^*_{(5)}]$ 0,7 oder höher ist.

4. Polymilchsäureharzzusammensetzung nach Anspruch 1, wobei eine Schmelzflussrate (MFR) der Polymilchsäureharzzusammensetzung 2 g/10 min oder weniger beträgt, wobei die Schmelzflussrate (MFR) bei 190 °C und einer Belastung von 2,16 kg gemäß JIS K 7210-1:2014 bestimmt wird.

5. Polymilchsäureharzzusammensetzung nach Anspruch 1, die ferner einen Zusatzstoff in einer Menge von weniger als 1 Massenprozent der Polymilchsäureharzzusammensetzung umfasst, wobei der Zusatzstoff an eine reaktive Gruppe bindet, die eine Hydroxylgruppe, eine Carboxylgruppe oder beides ist, die in dem Polymilchsäureharz eingeschlossen ist.

6. Polymilchsäureharzzusammensetzung nach Anspruch 5, wobei der Zusatzstoff eine Carbodiimidverbindung ist.

7. Polymilchsäureharzzusammensetzung nach Anspruch 1, die ferner einen Zusatzstoff in einer Menge von weniger als 1 Massenprozent der Polymilchsäureharzzusammensetzung umfasst, wobei

der Zusatzstoff eine Verbindung ist, die gehinderte Phenole, Phosphor oder beides einschließt.

8. Polymilchsäureharzzusammensetzung nach Anspruch 1, wobei ein nicht umgesetztes Monomer, das in der Polymilchsäureharzzusammensetzung eingeschlossen ist, 5.000 ppm oder weniger beträgt.

9. Polymilchsäureharzzusammensetzung nach Anspruch 1, wobei das Polymilchsäureharz eine L-Form von Milchsäure in einer Menge von 90 Mol-% oder mehr einer konstituierenden Monomereinheit des Polymilchsäureharzes einschließt.

10. Polymilchsäureharzzusammensetzung nach Anspruch 1, wobei ein 2 mm dickes Pellet der Polymilchsäureharzzusammensetzung einen Gelbindex (YI) von 25 oder weniger, gemessen gemäß JIS K 7103:1977, aufweist.

11. Polymilchsäureharzzusammensetzung nach Anspruch 1, umfassend:

Polymilchsäure, die durch Ringöffnungsadditionspolymerisation von Lactid unter Verwendung einer Zinnverbindung als Metallkatalysator erhalten wurde; und
Monocarbonsäure oder Monocarbonsäureanhydrid.

12. Polymilchsäureharzzusammensetzung nach Anspruch 11, wobei die Monocarbonsäure eine aliphatische Monocarbonsäure ist und das Monocarbonsäureanhydrid ein aliphatisches Monocarbonsäureanhydrid ist.

13. Polymilchsäureharzzusammensetzung nach Anspruch 11 oder 12, wobei die Monocarbonsäure Essigsäure ist und das Monocarbonsäureanhydrid Essigsäureanhydrid ist.

14. Polymilchsäureharzzusammensetzung nach Anspruch 11 oder 12, wobei die Polymilchsäureharzzusammensetzung durch Zugabe der Monocarbonsäure oder des Monocarbonsäureanhydrids zu einer Umgebung erhalten wird, die ein komprimierbares Fluid einschließt.

**Revendications**

1. Composition de résine d'acide polylactique, comprenant :

une résine d'acide polylactique en une quantité de 99 % en masse ou plus, dans laquelle
une viscosité complexe $\eta^*_{(20)}$ de la composition de résine d'acide polylactique est de $2 \times 10^3$ Pa·s ou plus, et
un rapport de la viscosité complexe $\eta^*_{(20)}$ à une viscosité complexe $\eta^*_{(5)}$, qui est représentée par $[\eta^*_{(20)}/\eta^*_{(5)}]$, est de 0,6 ou plus,
où la viscosité complexe $\eta^*_{(5)}$ et la viscosité complexe $\eta^*_{(20)}$ sont des viscosités complexes mesurées respectivement 5 minutes et 20 minutes après le début de la mesure à l'aide d'un viscosimètre rotatif de type à plaques parallèles dans les conditions de mesure ci-dessous :
[Conditions de mesure]

- Plaques parallèles : 20 mm de diamètre, en aluminium ;
- Température : 200 °C ;
- Écart entre les plaques parallèles : 1,00 mm ;
- Fréquence : 1 Hz (6,28 rad/s) ;
- Atmosphère : sous air sec (point de rosée : - 60 °C) ; et
- Taille de l'échantillon de mesure : une bande de 30 $\mu$m d'épaisseur, 7 mm de largeur et 35 mm de longueur,

et dans laquelle un poids moléculaire moyen en poids de la résine d'acide polylactique est de 300 000 ou plus et de 1 000 000 ou moins, déterminé comme indiqué dans la spécification.

2. Composition de résine d'acide polylactique selon la revendication 1, dans laquelle la viscosité complexe $\eta^*_{(20)}$ est de $2,5 \times 10^3$ Pa·s ou plus.

3. Composition de résine d'acide polylactique selon la revendication 1, dans laquelle la viscosité complexe $\eta^*_{(20)}$ est de $5 \times 10^3$ Pa·s ou plus et le rapport $[\eta^*_{(20)}/\eta^*_{(5)}]$ est de 0,7 ou plus.

**4.** Composition de résine d'acide polylactique selon la revendication 1, dans laquelle un débit massique à l'état fondu (MFR) de la composition de résine d'acide polylactique est de 2 g/10 min ou moins, le débit massique à l'état fondu (MFR) étant déterminé à 190 °C et à une charge de 2,16 kg selon JIS K 7210-1:2014.

**5.** Composition de résine d'acide polylactique selon la revendication 1, comprenant en outre un additif en une quantité inférieure à 1 % en masse de la composition de résine d'acide polylactique, dans laquelle
l'additif se lie à un groupe réactif qui est un groupe hydroxyle, un groupe carboxyle ou les deux inclus dans la résine d'acide polylactique.

**6.** Composition de résine d'acide polylactique selon la revendication 5, dans laquelle l'additif est un composé carbodiimide.

**7.** Composition de résine d'acide polylactique selon la revendication 1, comprenant en outre un additif en une quantité inférieure à 1 % en masse de la composition de résine d'acide polylactique, dans laquelle
l'additif est un composé comprenant du phénol encombré, du phosphore ou les deux.

**8.** Composition de résine d'acide polylactique selon la revendication 1, dans laquelle un monomère n'ayant pas réagi inclus dans la composition de résine d'acide polylactique est de 5 000 ppm ou moins.

**9.** Composition de résine d'acide polylactique selon la revendication 1, dans laquelle la résine d'acide polylactique comprend une forme L d'acide lactique en une quantité de 90 % en mole ou plus d'une unité monomère constitutive de la résine d'acide polylactique.

**10.** Composition de résine d'acide polylactique selon la revendication 1, dans laquelle une pastille de 2 mm d'épaisseur de la composition de résine d'acide polylactique a un indice de jaunissement (YI) de 25 ou moins tel que mesuré selon JIS K 7103:1977.

**11.** Composition de résine d'acide polylactique selon la revendication 1, comprenant :

l'acide polylactique obtenu par polymérisation par addition avec ouverture de cycle de lactide en utilisant un composé à base d'étain comme catalyseur métallique ; et
de l'acide monocarboxylique ou de l'anhydride monocarboxylique.

**12.** Composition de résine d'acide polylactique selon la revendication 11, dans laquelle l'acide monocarboxylique est l'acide monocarboxylique aliphatique, et l'anhydride monocarboxylique est l'anhydride monocarboxylique aliphatique.

**13.** Composition de résine d'acide polylactique selon la revendication 11 ou 12, dans laquelle l'acide monocarboxylique est l'acide acétique et l'anhydride monocarboxylique est l'anhydride acétique.

**14.** Composition de résine d'acide polylactique selon la revendication 11 ou 12, dans laquelle la composition de résine d'acide polylactique est obtenue par addition de l'acide monocarboxylique ou de l'anhydride monocarboxylique à un environnement comprenant un fluide compressible.

# FIG.1

# FIG.2

# FIG.3

**EP 4 335 887 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014088579 A
- JP 6024299 B

- CN 110628193 A

**Non-patent literature cited in the description**

- **YOSHIO INOUE**. Structure, Physical Properties, and Biodegradability of Aliphatic Polyester. *Polymer*, 2001, vol. 50 (6), 374-377
- **YOSHIO IWAI** ; **UCHIDA HIROHISA**. Solubility of High-Boiling-Point Compound in Supercritical Fluid. *High Pressure Science and Technology*, 1996, vol. 5 (2), 71-77

- Voluntary Standards for Polyolefin and Other Synthetic Resin Food Containers and Packaging. Hygiene Test Methods. June 2004, 13
- **SATOSHI NAGAI** ; **MASAYUKI NAGAI**. Biopolymer Alloying Technology. *Molding*, 2012, vol. 24 (8), 444-448
- The Society of Polymer Science. *Proceedings*, 2010, vol. 67 (9), 537-540